# EUROPEAN PATENT SPECIFICATION

(11) **EP 2 572 057 B1**
(45) Date of publication and mention of the grant of the patent: **15.10.2014**
(21) Application number: 11716446.7
(22) Date of filing: 25.02.2011
(51) Int. Cl.: E04C 2/52

(54) **HEAT INSULATING PANEL WITH ACTIVE REGULATION OF HEAT TRANSITION**
WÄRMEDÄMMPLATTE MIT AKTIVER WÄRMEDURCHGANGSREGELUNG
PANNEAU D'ISOLATION THERMIQUE À RÉGULATION ACTIVE DE LA TRANSITION DE CHALEUR

(30) Priority: 20.05.2010 SK 50312010 U; 20.05.2010 SK 50192010
(43) Date of publication of application: 27.03.2013
(73) Proprietor: Kalús, Daniel, 821 07 Bratislava (SK); Páles, Peter, 900 21 Svätý Jur (SK); Pelachová, L'ubica, 2410 Hainbur an der Donau (AU)
(72) Inventor: Kalús, Daniel, 821 07 Bratislava (SK); Páles, Peter, 900 21 Svätý Jur (SK); Pelachová, L'ubica, 2410 Hainbur an der Donau (AU)
(74) Representative: Jeck, Anton
(86) International application number: PCT/SK2011/000004
(87) International publication number: WO 2011/146025

(56) References cited:
- FR-A1- 2 507 647
- FR-A1- 2 584 437
- US-A1- 2008 295 450

## Description

### Area of technology

Technological handling is related to constructional handling of heat-insulating panel with active thermal protection for application with system of active regulation of heat transition used in panel building of new buildings and for the construction of prefabricated objects made of light external claddings and production of internal environment of the buildings in application of low-temperature heating and high-temperature cooling mostly with the use of renewable energy sources. Technological handling falls within the area of building industry.

### Existing state of technology

Design of usual energy saving buildings consists of the design of building constructions with massive layers of thermal insulation, that have from the standpoint of structure required thermal resistance, i.e. coefficient of heat transition and energy systems used for heating, ventilation and cooling, that use mainly renewable energy sources that is mostly solar and geothermal energy.

In case of usual energy saving buildings, the system of building constructions with massive layer of thermal insulation are used, that have from the standpoint of the structure required thermal resistance, i.e. coefficient of heat transition. Even panels of shell structure, where the space between the concrete is filled with heat insulating materials, is filled with heat-insulating material, e.g. foam material. The shortcoming of such construction of panels is that at the connections of metal corrosion occurs in the intermediate space, where there in the winter temperature falls below the dew point and will bring about lasting moisture.

Even construction of prefabricated panels with heat-insulation applied to concrete panel during his production as it is described in documents FR-A-2584437 and FR-A-2 507647 is known, though its production is problematic.

Systems are also known as heat-insulation panels applied as lightweight cladding on the supporting frame structure.

System of active heat protection that is already applied in the construction of some buildings has brought qualitatively new dimension into the problem of building constructions for energy saving buildings. Active heat protection brings so called internal energy source, considered as an energy system integrated into the zone between the static part and heat insulating part of the building construction in a form of low-temperature heat transitioning material obtained from captured and cumulated solar and geothermal energy to building constructions. Application of this active heat protection is implemented e.g. to a building where for the purpose of the distribution of low-temperature heat transitioning liquid material obtained from solar and geothermal energy to the exterior wall of constructed building, or to the interior part of the wall of e.g. listed buildings, tube system or hosepipe system is attached and overlaid with plaster, heat-insulation and cover plaster. This is applied to new buildings as well as to existing buildings when providing heat cladding.

Moreover, a way of building by permanent shuttering, mostly polystyrene one, is known, where active heat protection is positioned and just after the action of positioning on the building the inner space of permanent shuttering is filled with poured concrete mixture. In the next step, the concrete must become solid and reach required stability within 28 days. This technology is so called "wet process of building". This is applied only to new buildings.

The disadvantage of heat-insulating panels without active heat protection is that their heat resistance is directly proportional to the thickness of heat-insulation. Their function is to form the cover construction of building. They cannot actively react to sudden changes of exterior temperature. They do not have the capacity to provide heating, cooling and ventilation of the building.

Low thermal losses, i.e. thermal gains predetermine application of low-temperature heating systems e.g. large-area floor-, wall- and ceiling- heating or cooling for energy saving buildings. Recuperative ventilation of buildings with capacity of warm air heating system or cooling system is inevitable for reaching passive standard of energy.

Nowadays, we know numbers of variants combining in principle 3 types of energy, i.e. solar energy obtained from solar collectors and solar panel roofs, geothermal energy obtained from heat pumps, soil thermal reservoirs, soil collectors or energy from surrounding environment obtained by heat pump in a system water-to-water, air-to-air and ground-to-ground. In many cases, combinations of these sources of heat and energetic systems are unnecessarily over-dimensioned and over-combined and therefore their investment costs are in view of overall economic return and energy saving unacceptable. The only way to achieve the design of optimal energy saving building from the point of view of energy demandingness, profits and environmental load is right application of heat sources and integration of energy systems in a building. Perfect harmony between building constructions and energy systems forming healthy, hygienically satisfying inner environment of buildings must be achieved.

Laid open document US 2008/0295450 A1 presents a solution for a prefabricated multi-layer wall panel, which can be used for a modular building system. Described in detail is the manufacturing process of the panels. The known prefabricated multi-layer wall panel reduce the necessary steps of procedure at building construction sites The known prefabricated multi-layer wall panel comprises a layer comprising empty installation channels. The channels are provided for incorporating electric and cooling- or heating installations. The frames of the prefabricated multi-layer wall panel comprise at the upper and lower end openings, through which the electric, cooling- or heating-installations can be mounted. The known prefabricated multi-layer wall panels are an integral part of the building and cannot be mounted later on at the walls of the building.

Above mentioned shortcomings of existing systems of constructions of heat insulating panels without active heat regulation with respect to limited function, higher operating costs of the building and saving of primary sources of energy led to the possibility to solve this problem by appropriate technological means. The result of such effort is the further described construction of a heat-insulating panel for the systems with active regulation of heat transition.

The object of the present invention is solved by the technical features according to claim 1.

### Basis of technological handling

The invention relates to a heat-insulating panel for systems with active regulation of heat transition which comprises at least one heat-insulation.

According to the invention the above mentioned shortcomings are removed by the fact that on the surface of the heat-insulation or in the volume of the heat-insulation is applied at least one of a tube or hose or channel arrangement which directly distributes a heating or cooling liquid or gaseous media, whereby the heat-insulation is bounded at least from one side by a supporting frame and/or bounded at least from one side by a large scale boundary plate. The supporting frame and/or the large scale boundary plate comprises bindings and/or anchors, whereby the heat-insulation panel is applied by said bindings and/or anchors to a supporting structure and said supporting structure itself is connected to an interior and/or exterior side of a wall of a building.

The heat-insulating panel according to the invention can have multiple purposes or can have just one. The most important functions are e.g. function of heat barrier, wall heating, cooling, ventilation, solar absorbent and combinations of these functions.

Advantageous arrangements and improvements are objects of dependent claims.

Supporting structure of the panel consists of exterior and / or interior distant large-straight or profiled plate or panel design with a supporting frame which can be made of wood, plywood , metal profiles, plates, sheet metal, plastic or other suitable materials.

Heat-insulation for the purposes of this invention may be polystyrene, mineral wool, stone wool, a mixture of polyurethane, cellulose, organic matter such as straw, wool, fabrics applied in heat-insulation systems of contact and ventilation and all other heat-insulation and their combinations applied in construction.

To improve the static and dynamic properties of heat insulating panel with active heat protection system for the application of active management of heat transition is preferred area bounded by exterior and / or interior distant large-straight or shaped plate affixed to a supporting frame or reinforcing elements. In order to fix this heat insulation panel with active heat protection system for the application of active management heat transition, for example by using an additional heat insulation on the perimeter of the building panel, the carrier portion of heat-insulating panels contain appropriate anchors. The opportunity is that at least one face surface heat-insulating panel is provided with a protective film for reasons such as storage or transport. This protective film can be thin PVC film, which is after the delivery of heat insulation panel with active regulation of heat transition on the site swept up or left. Part of heat- insulating panel with active heat protection system for the application of active regulation of heat transition can also be thermally conductive or reflective layer.

This thermally conductive or reflective layer may be based on coatings, thermally conductive films, conductive thermal spraying, coating or other combinations. For purposes of applying the heat - insulation panel with active heat protection system for the application of active regulation of heat transition from the interior side of the building is directed to the interior surface of the panel lined with interior finishes. But also for purposes of applying the heat insulation panel with active heat protection for the application of active regulation of heat transition from the outside, the building is directed into the exterior panel area lined with exterior surface treatment such as mesh, adhesive plaster and the like. Heat insulation panels can be multi-use but may also be special purposed. Their most important functions are: heat barrier, wall heating, cooling, ventilation, solar absorber, and combinations of these methods function. Heat insulation panels can be applied from the outside of the building or interior of the building including on the horizontal structures and in the capacity of floor and ceiling heating and cooling. Described above for the basic construction of heat insulating panel with active heat protection system for the application of active regulation of heat-transition lead to the following designing solutions of these panels:

They are heat-insulating panels with one layer of insulation, which consist of active heat protection - heat barrier realized by tubular or hose or channel distribution arrangement the heat transition or cooling liquid or gaseous medium fit with devices on the solid board insulation as manufactured.

Elements of the active heat protection - heat barrier may be attached to an insulating board system as used for example for laying pipes for underfloor heating.

Elements of active heat protection - heat barrier may be deposited directly in the slot milled in the solid board insulation, or may be encapsulated, embedded in a rigid board insulation directly in its production. Active heat protection - heat barrier will be in all the above alternatives applied to at least one side of heat-insulating panel. Consequently the application of heat insulation panels for heat barrier, low-temperature heating, high temperature cooling, solar absorber. And then there are of heat insulation panels with one layer of insulation and the supporting frame, where the space between the frame is filled with heat insulation.

Active heat protection - heat barrier is located just below the interior and / or exterior surface of the heat-insulating panel and is in contact with at least one thermally conductive layer. Heat insulating panel can be applied on interior and exterior of the building walls, or structural frames as lightweight cladding. Consequently, it is his application to heat barrier, low-temperature heating, high-temperature cooling and solar absorber. They are heat-insulating panels with one layer of insulation and peripheral hub plates. In these panels is the space between the peripheral hub plates filled with heat insulation.

Active heat protection - heat barrier is located just below the interior and / or exterior surface of heat-insulating panel and is in contact with at least one thermally conductive layer. Heat insulating panel can be applied on interior and exterior side of the building walls, or structural frames as lightweight cladding. Consequently, it is his application to heat barrier, low-temperature heating, high temperature cooling, solar absorber. They are heat-insulating panels with one layer of insulation and marginal plates and large-scale air channels. In these panels is the space between the hub plates filled with heat insulation.

Air ducts are located just below the interior and / or exterior surface of the heat-insulating panel and are in contact with at least one thermally conductive layer. Heat insulating panel can be applied on interior and exterior side of the building walls, or structural frames as lightweight cladding.

Consequently, it is his application for air heating and cooling, ventilation, solar hot air collector. They are heat-insulating panels with one layer of insulation and peripheral hub plates in combination with air ducts and heat barrier. In these panels is the space between the peripheral hub plates filled with heat insulation. Air ducts and heat barrier are placed just below the interior and / or exterior surface of the heat-insulating panel and are in contact with at least one thermally conductive layer. Heat insulation panels can be applied on interior and exterior side of the building walls, or structural frames as lightweight cladding. Consequently, it is his application to heat barrier, and low temperature hot air heating, cooling, ventilation, heat-air solar collector. They are heat-insulating panels with multiple layers of insulation, which consist of active heat protection - heat barrier fit with devices for solid board as heat insulation. from polystyrene. Active heat protection - heat barrier is maybe anchored to an insulating board system as used for example for laying pipes for underfloor heating.

Active heat protection - heat barrier can may be deposited directly as milled grooves in rigid board insulation, or may be embedded, embedded in a rigid board insulation directly in its production. Active heat protection - heat barrier will be in all the above alternatives applied to at least one side heat-insulating panel, and can also be placed between layers of insulation. Consequently, it is his application to heat barrier, low-temperature heating, high-temperature cooling, solar absorber. They are heat-insulating panels with multiple layers of insulation with the median large-plate. The supporting frame is attached at the panels on the center large format plate. The center plate can be large-wood-based, drywall, metal, plastic, metal and other materials and combinations thereof.

Heat insulation panel for the systems with the application of active regulation of heat transition provided with the median large-plate can be used for heat insulation of buildings already constructed, ie to use the exterior side side of the building. In that case, the supporting frame attached to the external wall insulation of buildings and anchors is mounted on the peripheral wall of the building.

Heat insulation panel for the systems with the application of active regulation of heat transition provided with the median large-plate can also be used for structural frames of the building. The heat-insulating panel can be applied to heat barrier - active heat protection, heating and cooling. In order to adapt to the mounting dimensions of the structures is advantageous if the intermediate large-plate heat insulating panel for the system with the application of active regulation of excess heat transition through the frame. Then it can be a spur to adapt to local building requirements. Heat insulating panel for systems with active regulation of heat transition can be arranged in the modification of self-supporting heat insulating panel. In this case, the supporting frame is with heat insulation and tube or hose or channel distribution of arrangement the heat transition liquid or gaseous medium applied permanent connection to the supporting structure of its interior and / or exterior side side. The supporting structure for the purposes of this invention, concrete, reinforced concrete, expanded clay concrete panel or sheet metal, wood, metal, plastic plate or brick structure.

Heat insulating panel for systems with active regulation of heat transition can be arranged in the modification of light facade. In this case, the base layer or lining interior / or exterior side finishes are metal plates or sheets.

Preferably be at least one metal plate or metal cladding or interior layers of the visual / or exterior side surface to create at least one pipe or hose or channel distribution arrangement the heat transition liquid or gaseous media.

They are heat-insulating panels with multiple layers of insulation with peripheral hub plates. For the heat insulation panels is in the inner space with insulation integrated at least one thermally conductive surface with active heat protection, which divides the panel to at least two parts. Panel can be applied to heat barrier - active heat protection, heating and cooling.

They are heat-insulating panels with multiple layers of insulation with the peripheral plates with large-scale air channels. For the heat insulation panels is in the inner space with insulation integrated at least one thermally conductive surface, which creates air channels and distributes heat insulation panel to at least two parts. Panel can be applied to hot air heating, cooling, ventilation and air as the solar collector.

They are heat-insulating panels with multiple layers of insulation with peripheral hub plates with air ducts and heat barrier. For the heat insulation panels with active heat protection system for the application of active regulation with peripheral heat transition plates with large-scale air channels and heat barrier is in the inner space with insulation integrated at least one thermally conductive surface, which creates air channels and divides the panel to at least two parts and at least one thermally conductive surface with heat barrier - active heat protection. The heat-insulating panel can be applied to hot air heating, cooling, ventilation, and air solar collector, heat barrier, low-temperature heating and high temperature cooling.

They are heat-insulating panels with peripheral hub plates and warmed with a hollow core allowing controlled flow of air . For the heat insulation panels is active heat protection - heat barrier consisting of an isolated hollow core. The hollow core of insulation can be applied to one or more large-scale heat exchange units. It is also possible combination with active heat protection based tubes impregnated with liquid.

The advantages of the construction of the heat insulating panel for systems with active regulation of the heat transition according to established technological handling are apparent from the effects how it externally manifests itself. It is possible to point out, that building constructions for energy saving buildings are not dependent on the thickness of the static part of the construction but on the heat insulating ability of external insulating layers. This means that static part can be of maximum admissible thickness. By application of the building constructions with inner energy source, so-called active heat protection used in energy saving buildings, technical heat characteristics equal to usual building constructions used in energy saving buildings shall be achieved with few times thicker heat insulation. Building constructions with inner energy source of energy use at least 30% of long-term accumulated energy in a long-term heat reservoir with respect to the temperature of heat transitioning material supplied to the heat barrier-active heat protection with the temperature from 12°C. Rest of the energy is supplied from the short-term accumulation containers charged by the solar heat collectors and heat pump using the collector of soil heat reservoir, eventually by the other source. These abovementioned advantages are derived from abovementioned suggested constructions of heat insulating panels for systems with active regulation of heat transition according to the technological handling, that allows to use abovementioned constructions of systems of energy saving buildings.

### Overview of the pictures from the drawings

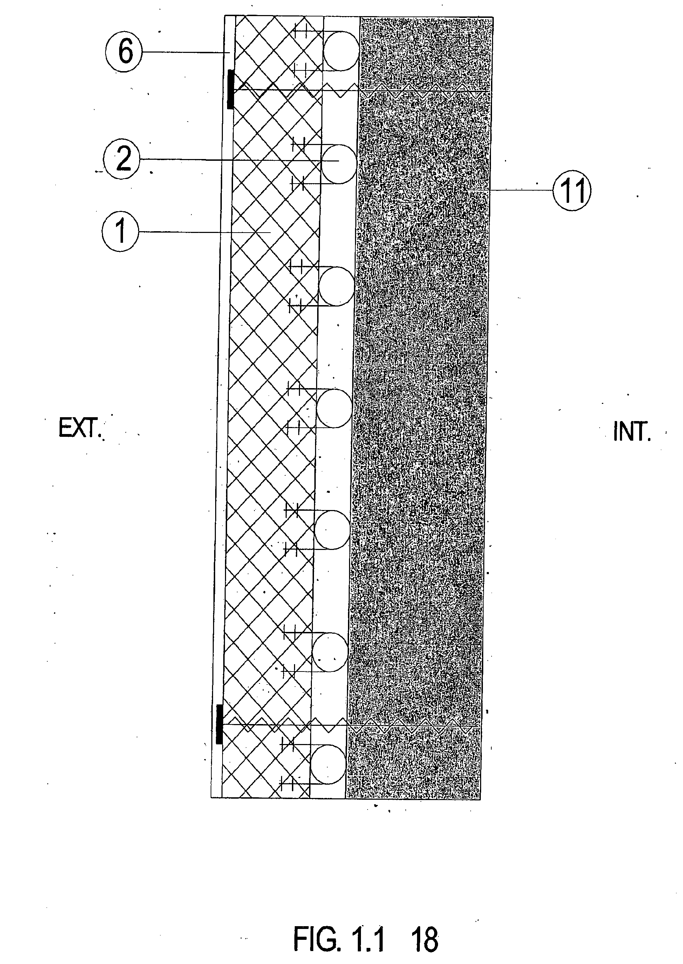

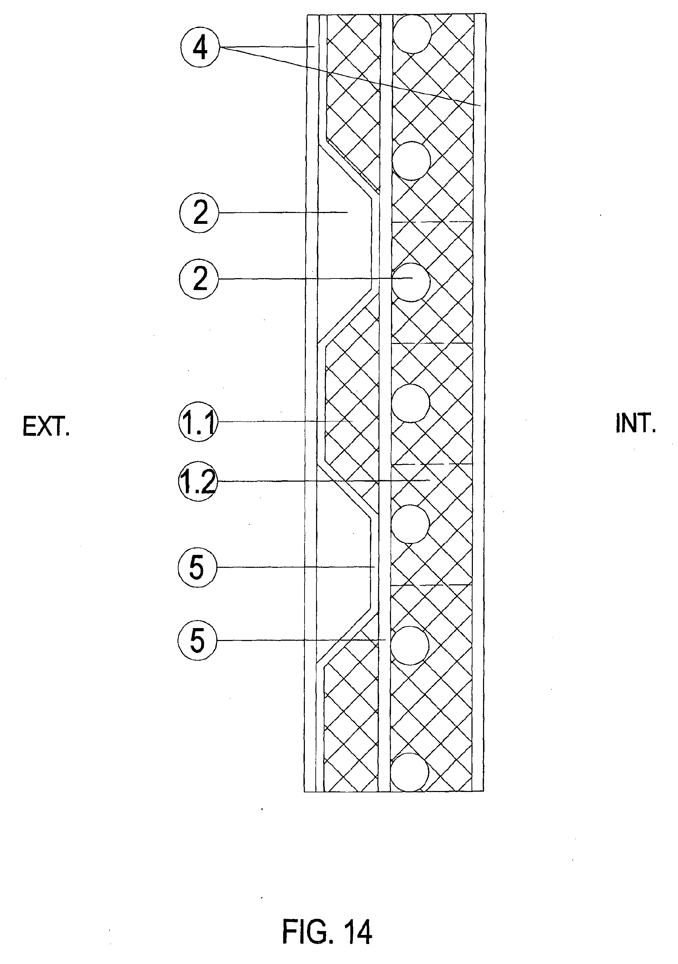

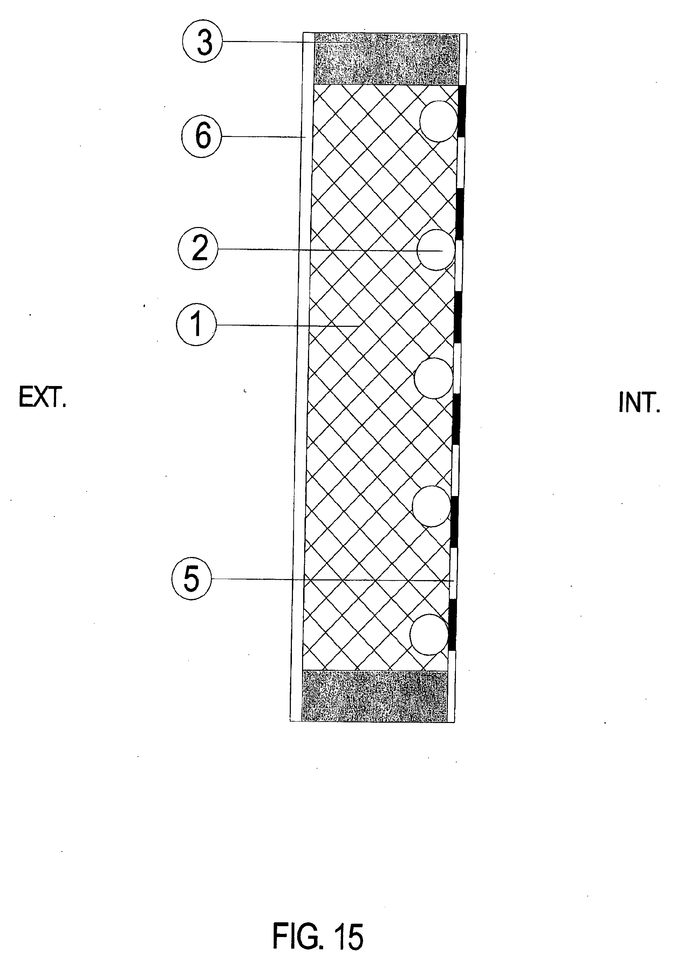

Fig 14 to 12.2, 14 and 15 disclose further heat insulation panels not forming part of the invention. Realizations of the heat insulating panels for the systems with active regulation of the heat transition according to the technological handling are illustrated in attached drawings. On Fig. 1.1 to 1.4 is shown a cross-section of heat insulating panel with one layer of insulation with elements of active heat protection - heat barrier undertaken in tube or hose arrangement of distribution of heat transition or cooling liquid medium applied to the perimeter bearing wall buildings.

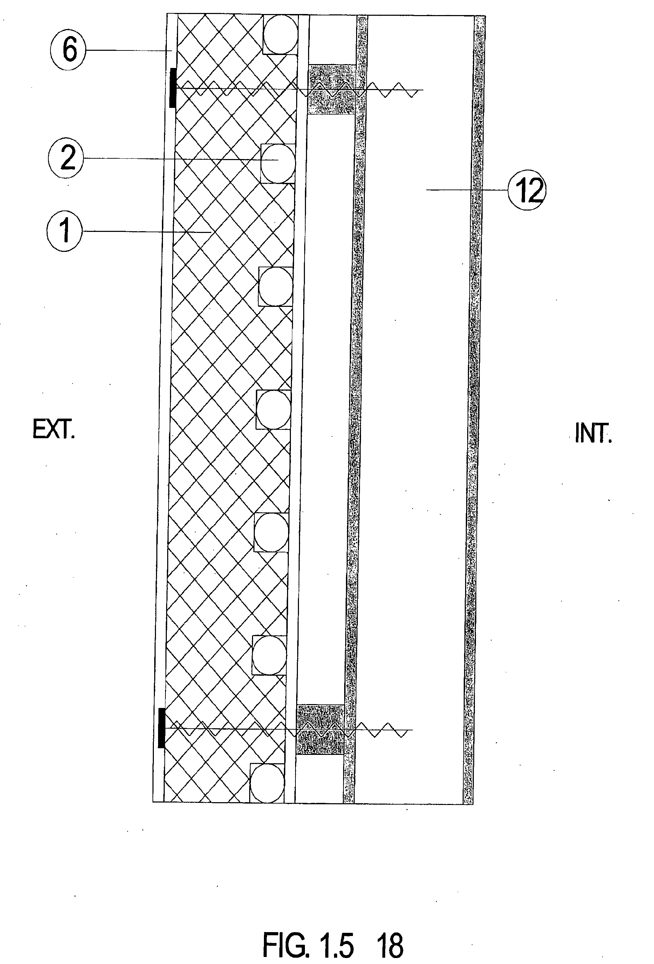

Fig. 1.5 to 1.8 show a cross-section on the construction of heat insulating panel with one layer of insulation elements with active heat protection - heat barrier placed inside of tube or hose arrangement of distribution of heat transition or cooling liquid medium applied to the support frame system of construction of buildings.

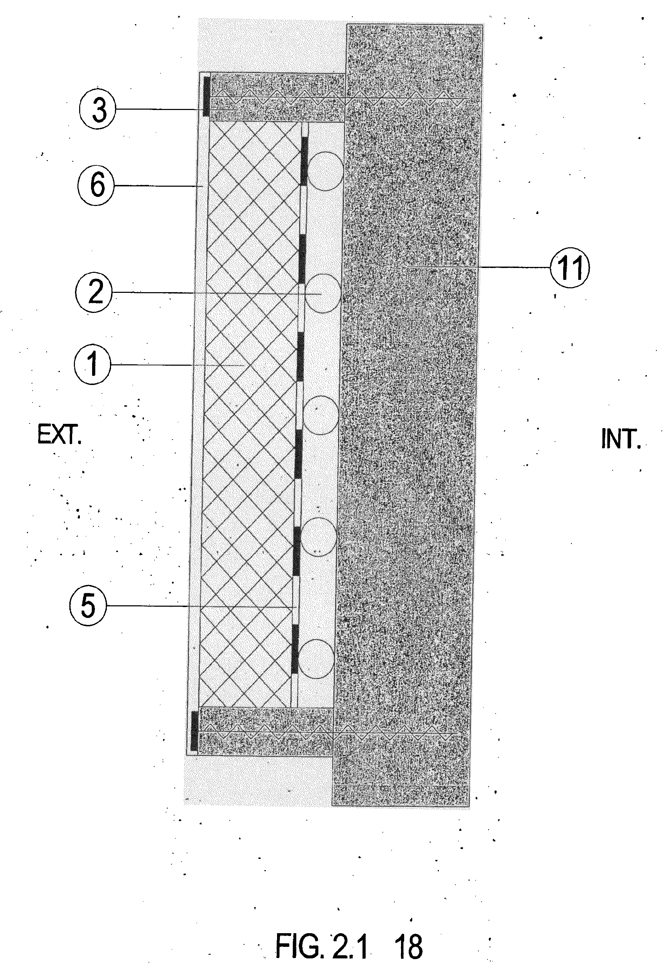

Fig. 2.1 to 2.3 show a cross-section on the construction of heat insulating panel frame structure with one layer of insulation elements with active heat protection - heat barrier placed inside of tube or hose arrangement of distribution of heat transition or cooling liquid medium applied to the perimeter bearing wall buildings.

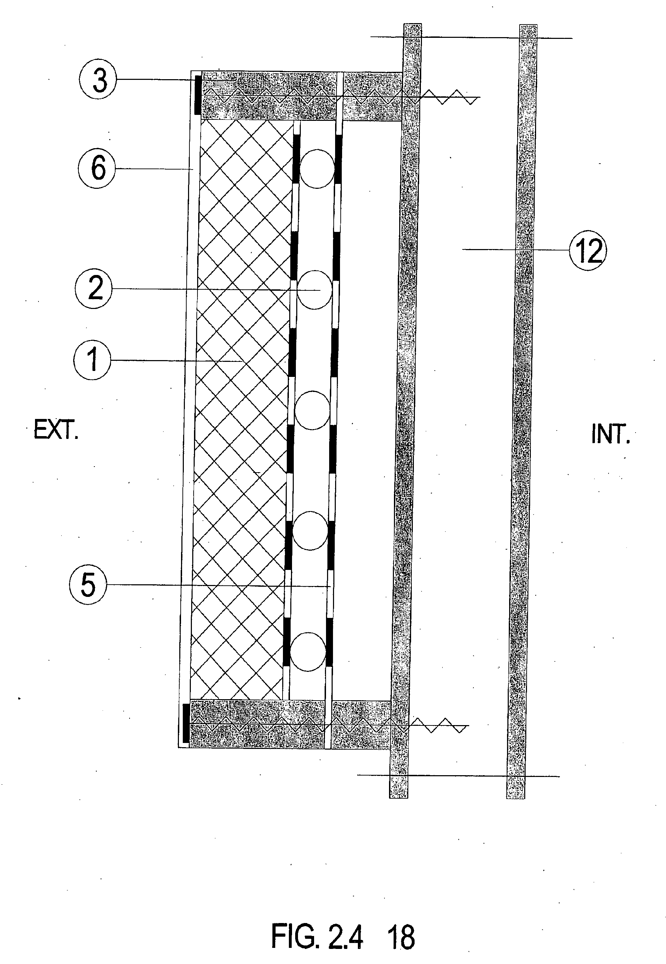

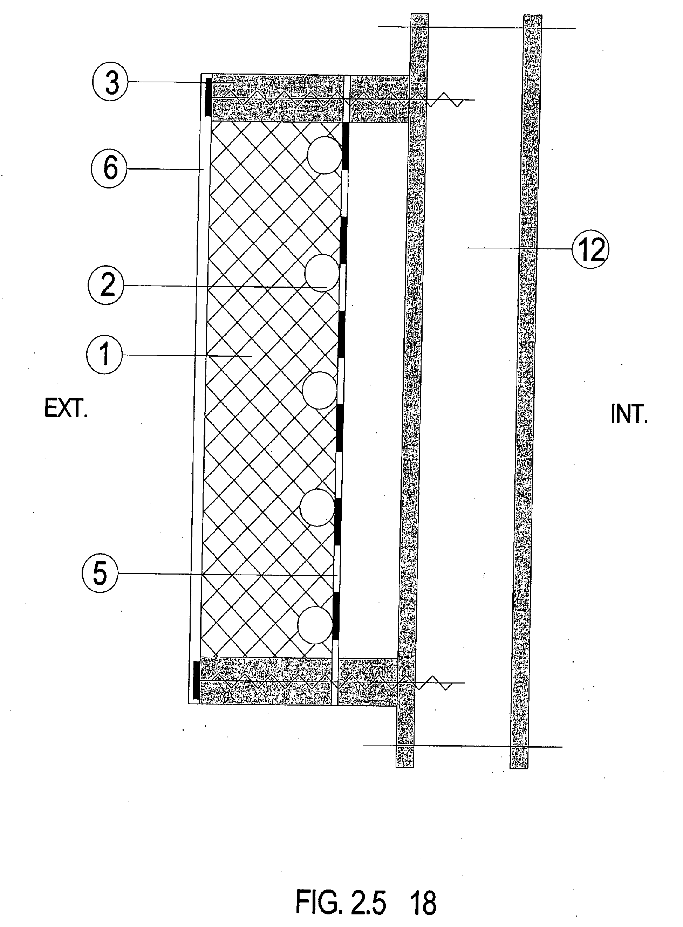

Fig. 2.4 and 2.5 show a cross-section on the construction of heat insulating panel frame structure with one layer of insulation elements with active heat protection - heat barrier placed inside of tube or hose arrangement of distribution of heat transition or cooling liquid medium applied to the support frame system of construction of buildings.

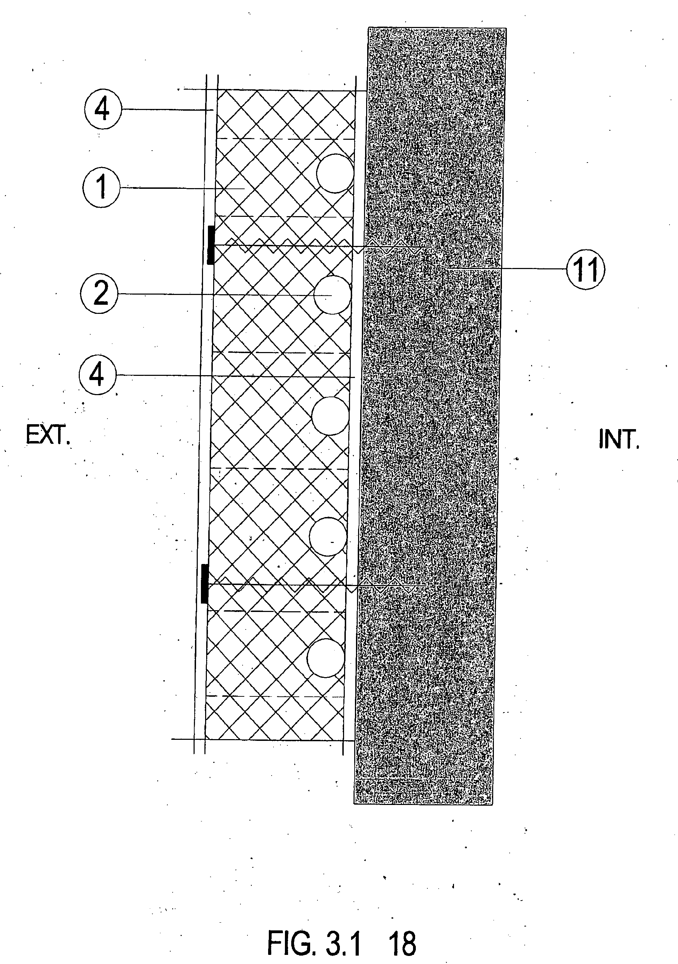

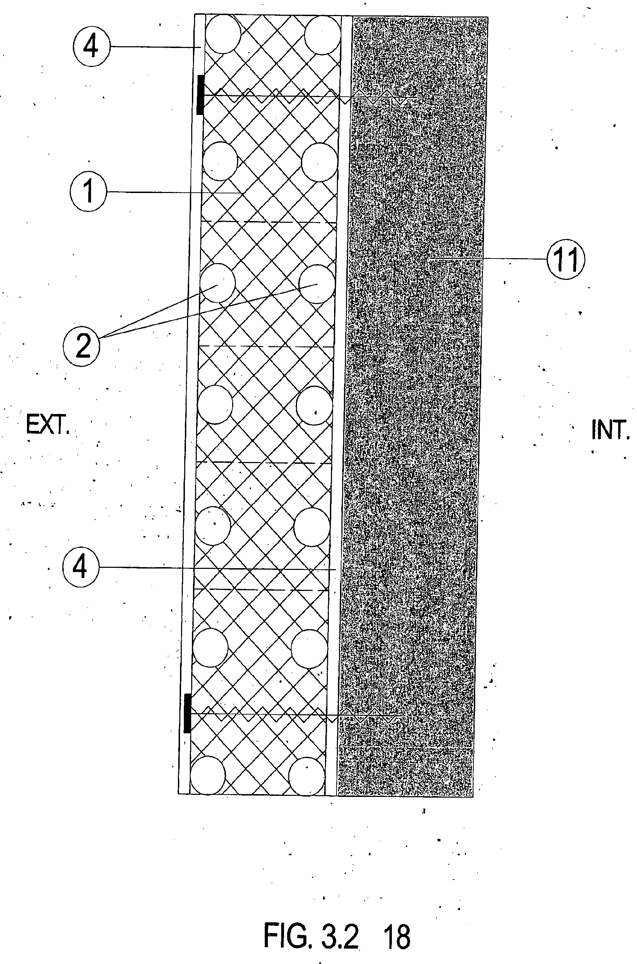

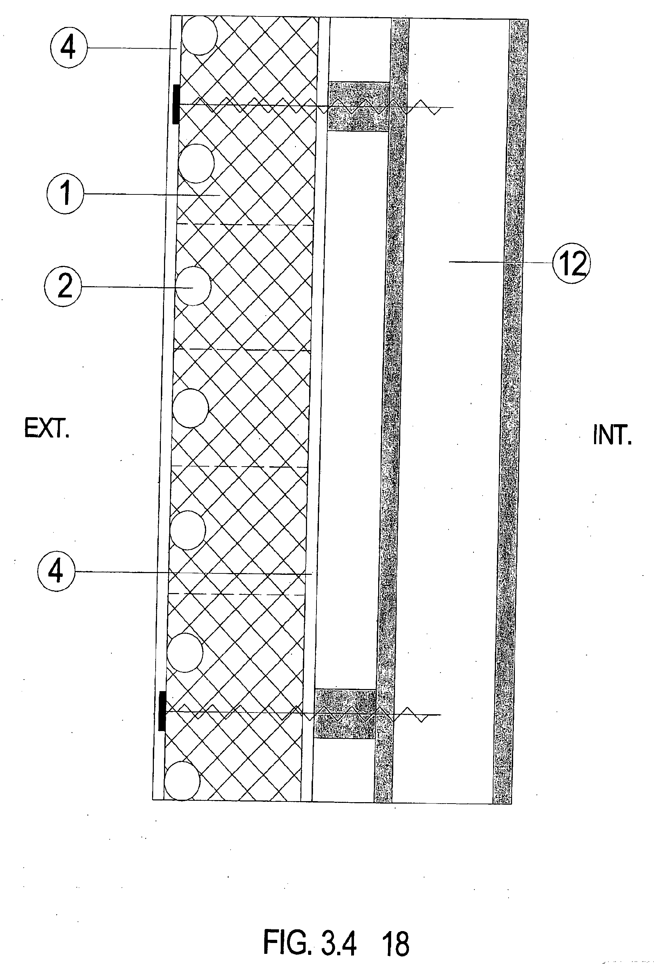

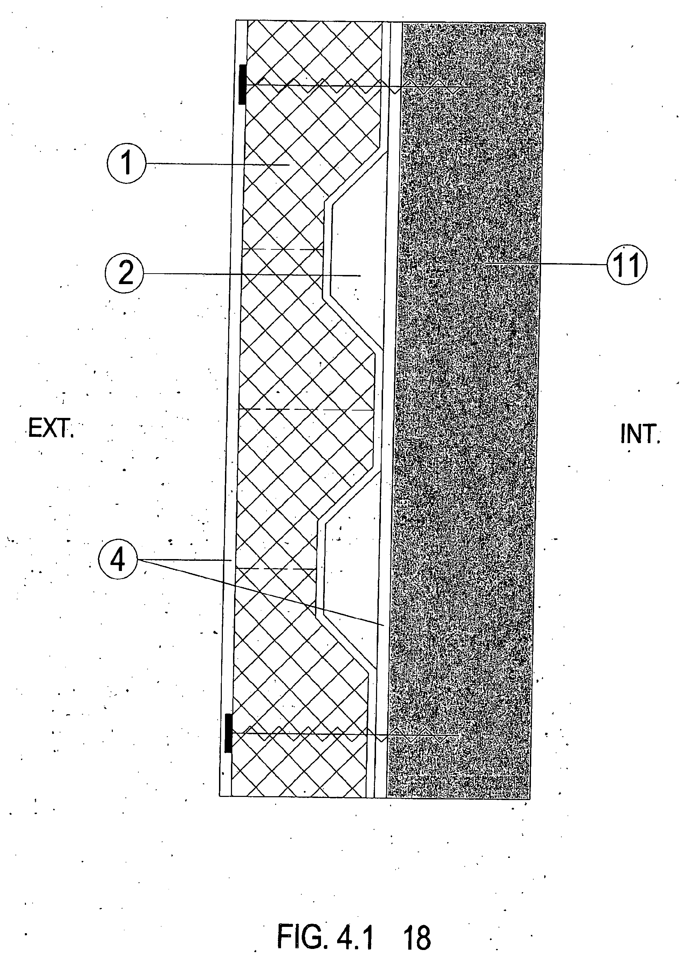

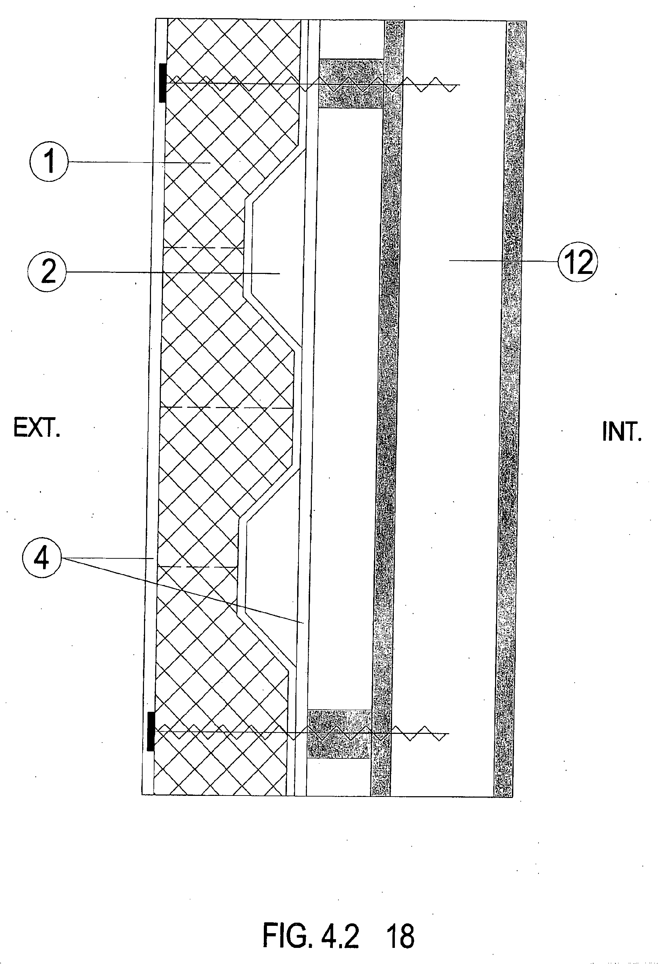

Fig. 3.1 to 3.3 show a cross-section on the construction of heat insulation panel with a peripheral large-scale plates with one layer of insulation elements with active heat protection - heat barrier placed inside of tube or hose arrangement of distribution of heat transition or cooling liquid medium applied to the perimeter bearing wall buildings. Fig. 3.4 to 3.6 show a cross-section of the construction of heat insulation panel with a peripheral large-scale plates with one layer of insulation elements with active heat protection - heat barrier placed inside of tube or hose arrangement of distribution of heat transition or cooling liquid medium applied to the support frame system of construction of buildings. Fig. 4.1 and 4.2 show a cross-section of the construction of heat insulation panel with a peripheral large-scale plates with one layer of insulation elements with active heat protection - heat barrier implemented distribution channel arrangement of heat transition or cooling gaseous medium.

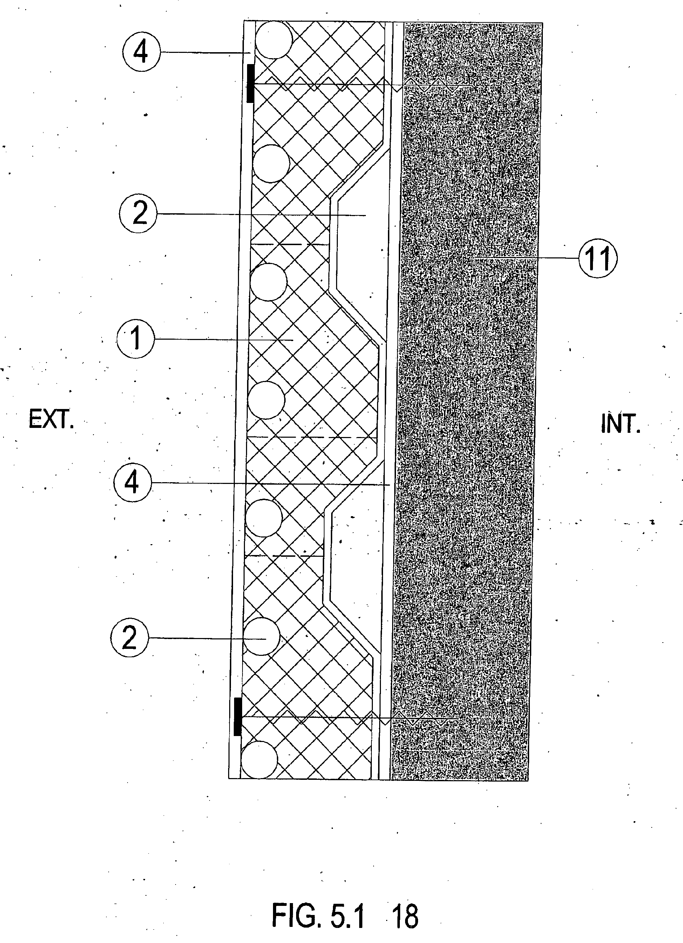

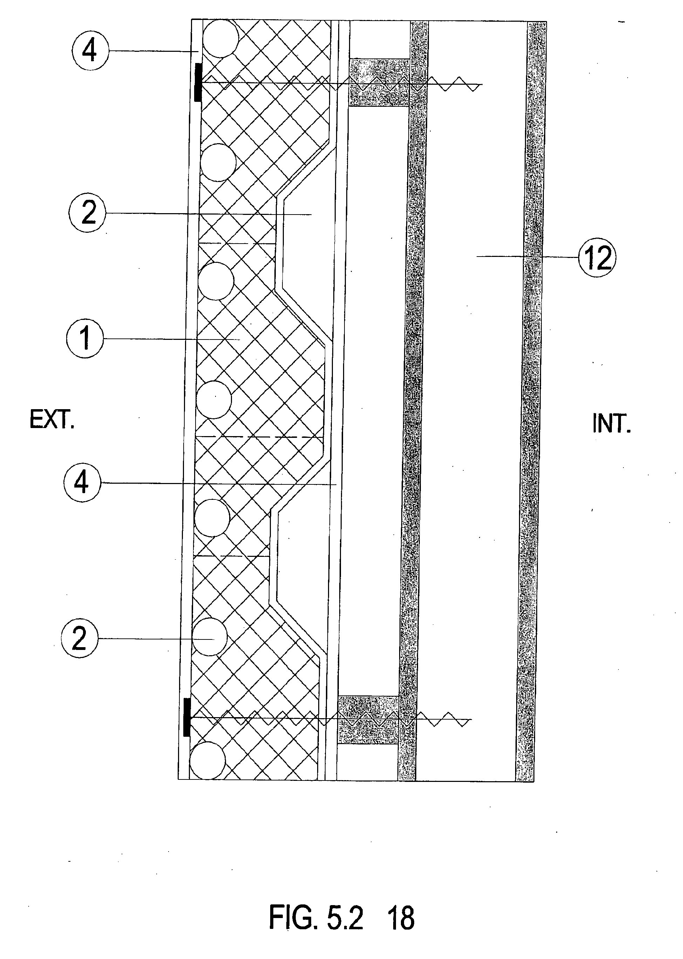

Fig. 5.1 and 5.2 show a cross-section of the construction of heat insulation panel with a peripheral large-scale plates with one layer of heat insulation in combination with a tubular or hose, while also organizing the distribution channel with heat transition liquid and gaseous media as a heat barrier and air ducts.

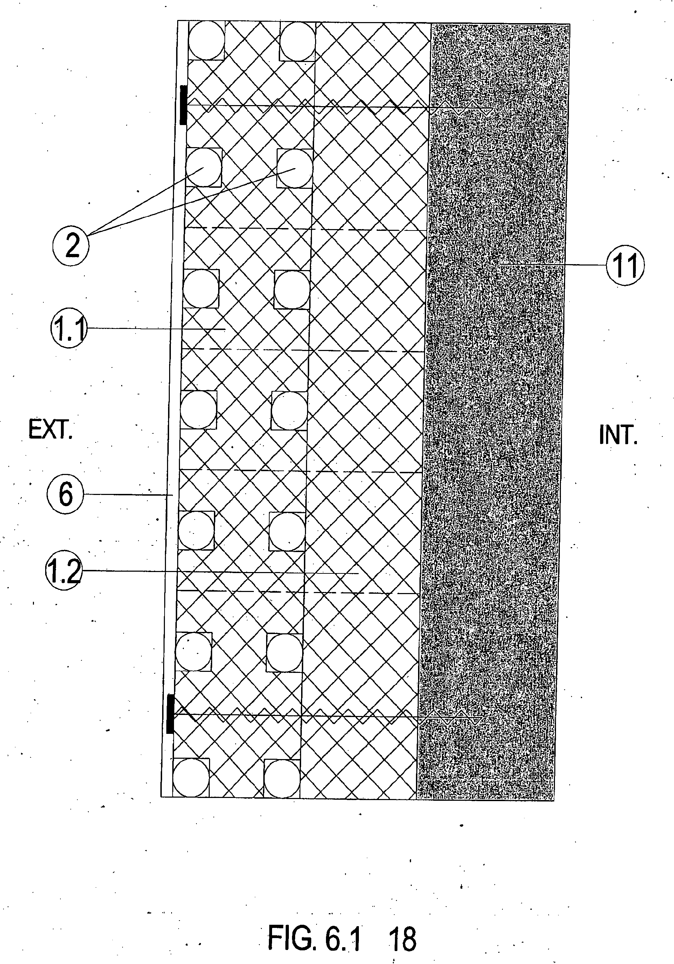

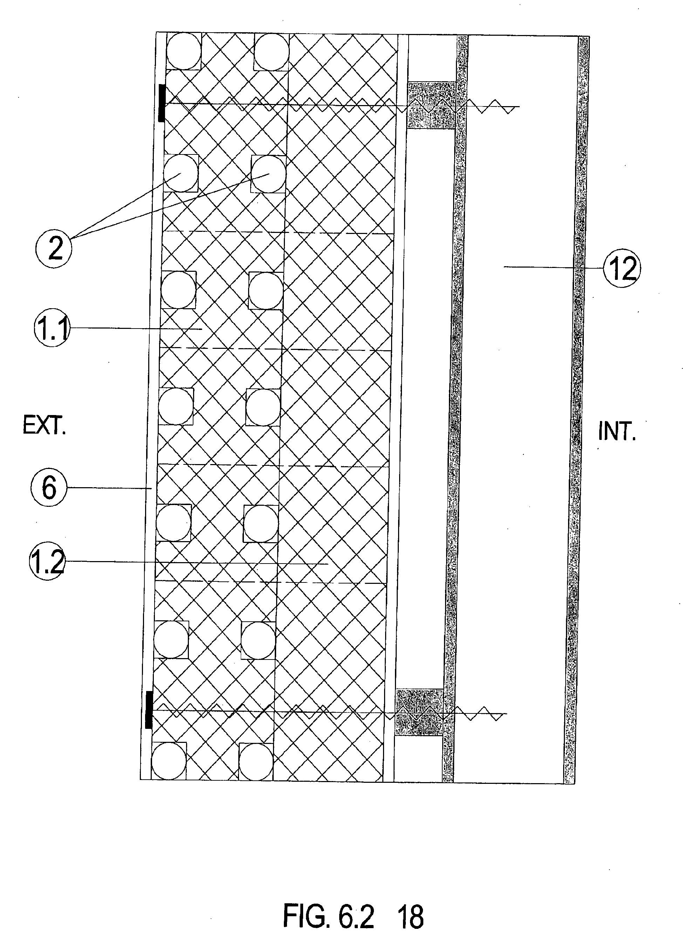

Fig. 6.1 and 6.2 show a cross-section of the construction of heat insulating panel with two layers of heat insulation in combination with two tubular or hose arrangement distribution of heat transition liquid medium and provided with plaster on the facade.

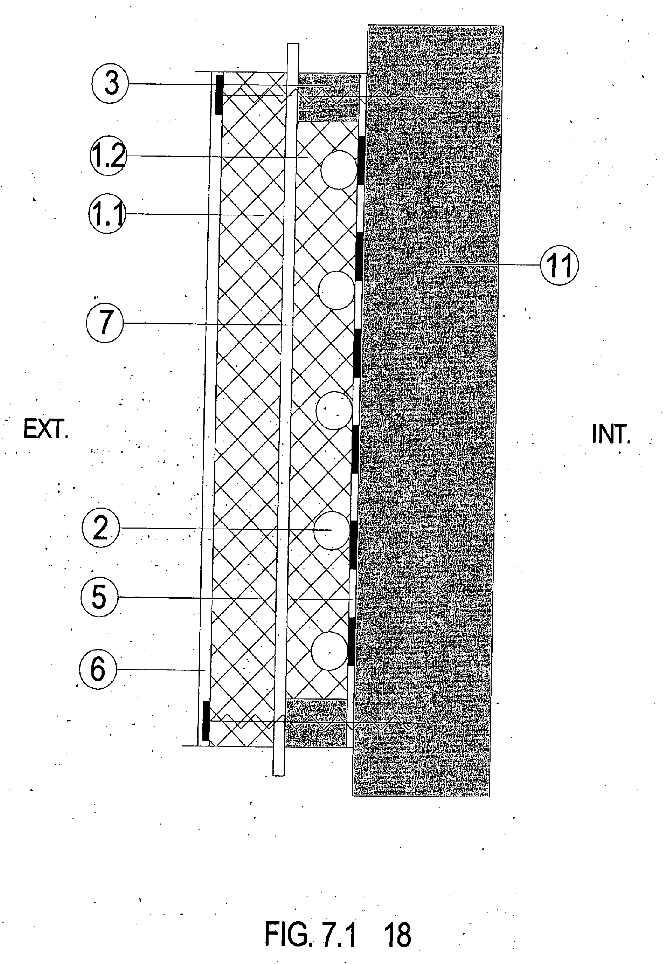

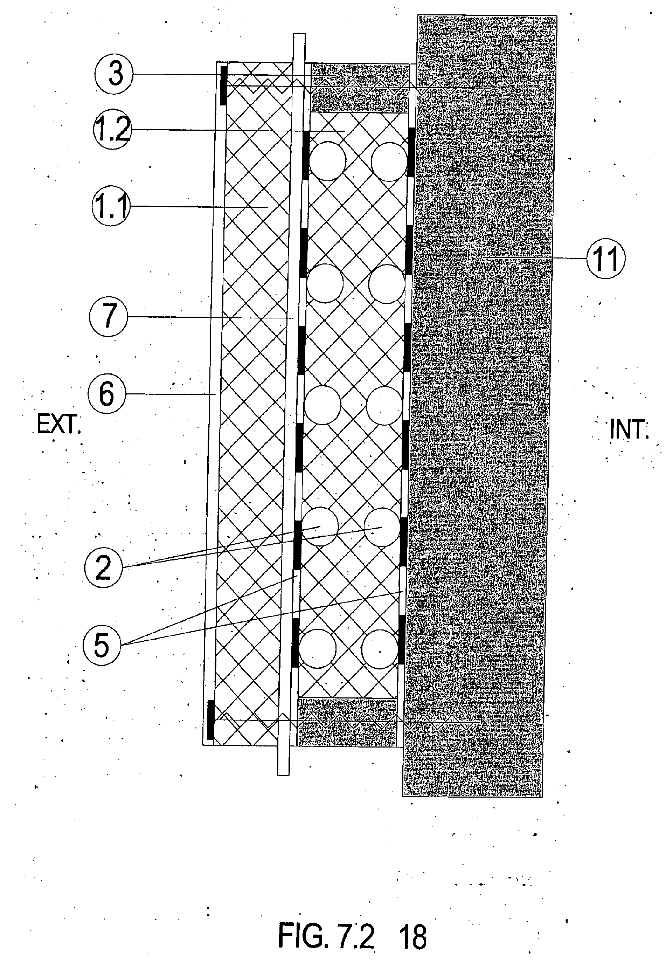

Fig. 7.1 and 7.2 show a cross-section of the construction of heat insulating panel with one central large-plate with two layers of insulation elements with active heat protection - heat barrier placed inside of tube or hose arrangement of distribution of heat transition or cooling liquid medium and large-plate center, applied to the nasal circumferential wall of the building.

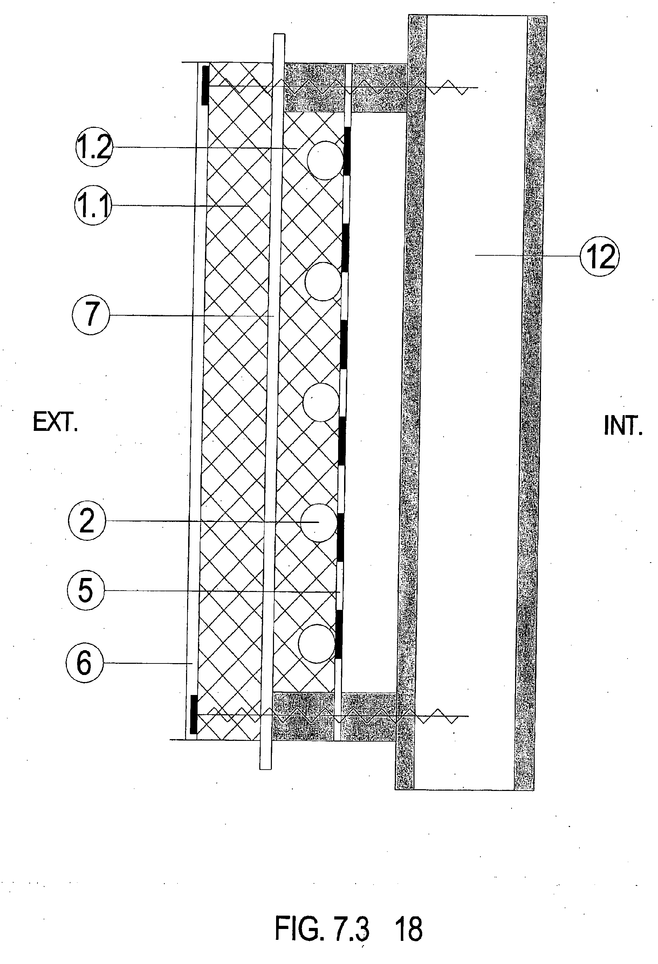

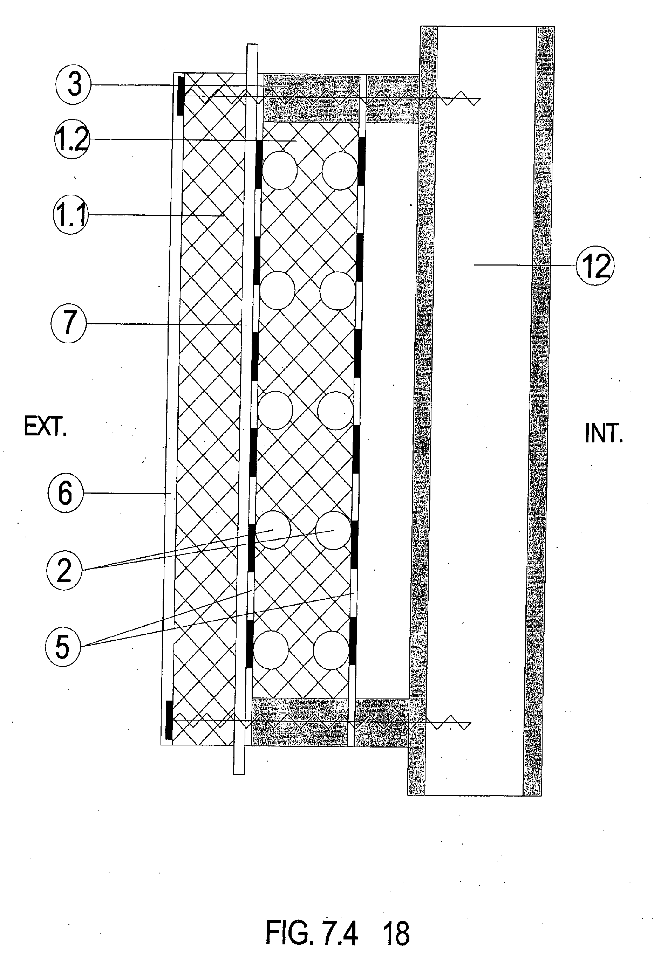

Fig. 7.3 and 7.4 show a cross-section of the construction of heat insulating panel with one central large-plate with two layers of insulation elements with active heat protection - heat barrier placed inside of tube or hose arrangement of distribution of heat transition or cooling liquid medium and large-plate center, applied to a carrier frame building construction system.

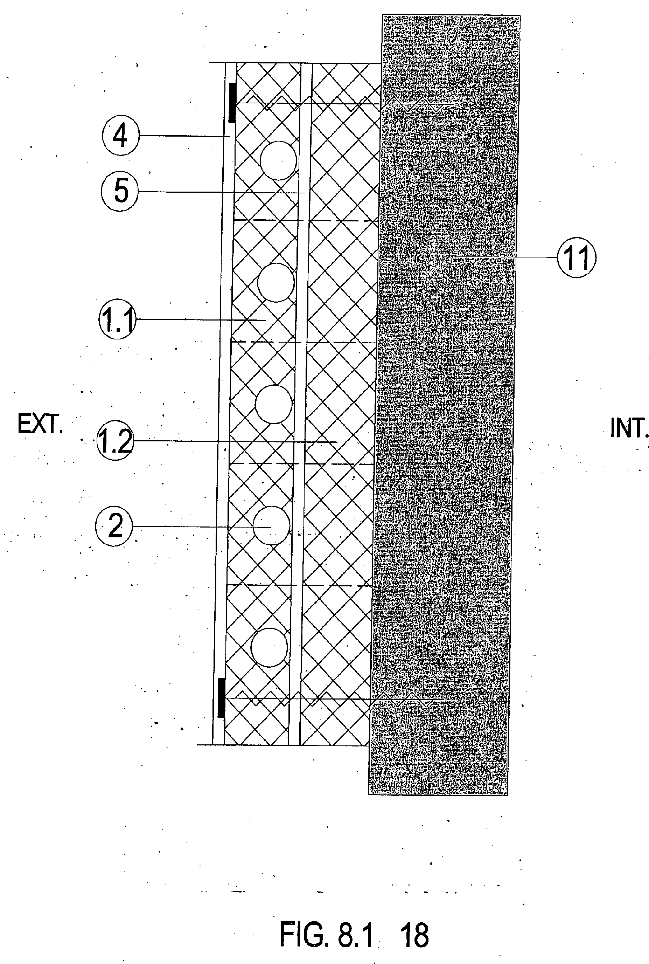

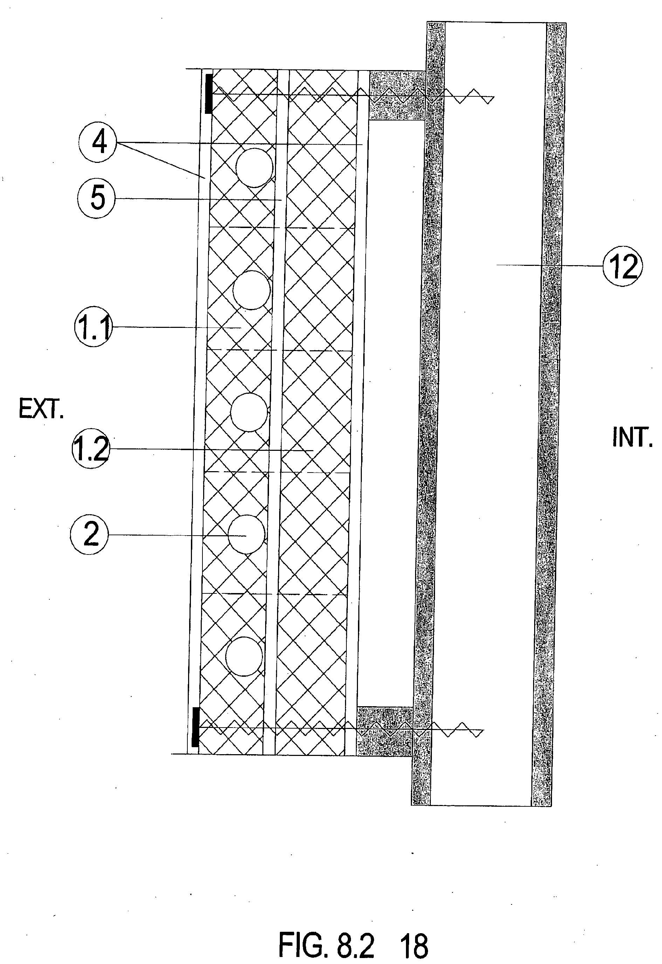

Fig. 8.1 and 8.2 show a cross-section of the construction of heat insulating panel with at least one large-marginal plate with two layers of heat insulation in combination with a tubular or hose arrangement of distribution of heat-carrying liquid medium and heat-conductive layer between two layers of insulation.

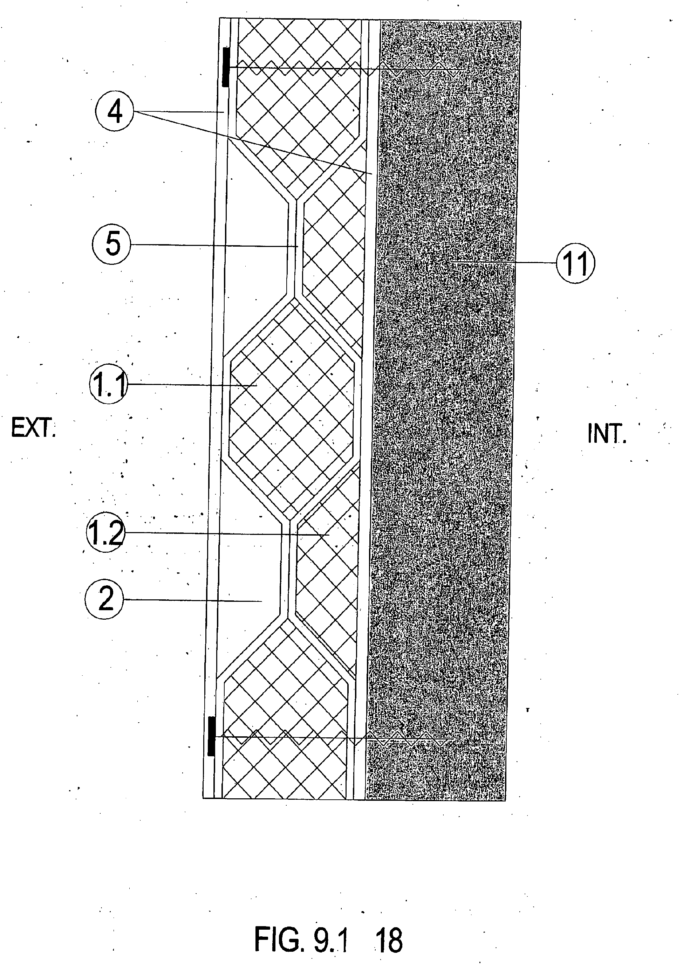

On Fig. 9.1 to 9.3 is shown a cross-section of the construction of heat-insulating panel with the two outermost large-printed plates with two layers of heat insulation in combination with the channel arrangement of the heat transition gas distribution media.

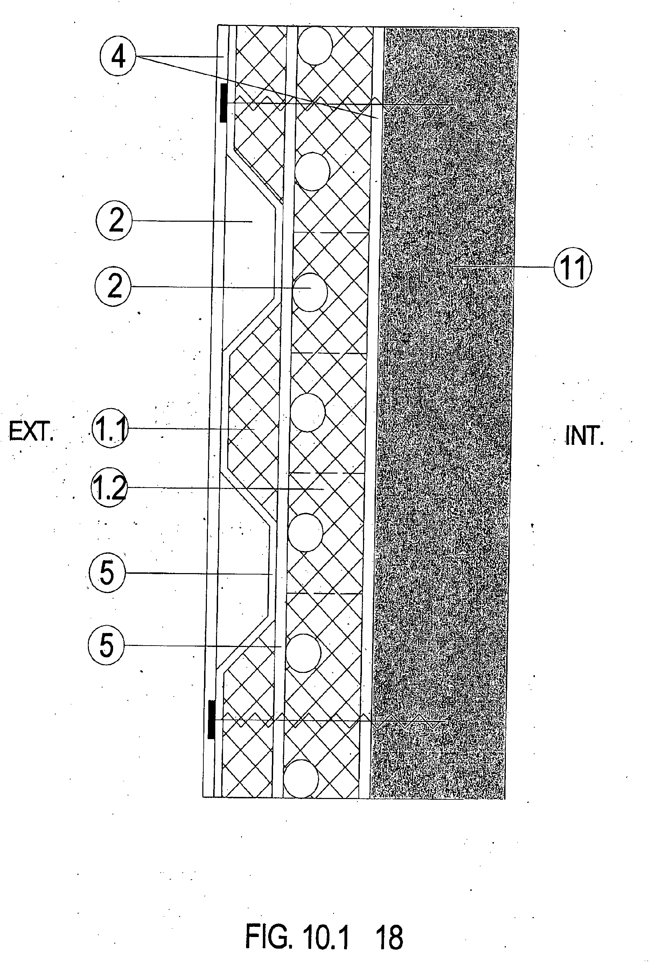

Fig. 10.1 to 10.3 show a cross-section of the construction of heat insulating panel with two large-scale boundary plates and two layers of insulation in combination with tubing or hose arrangement of heat transition liquid distribution media and distribution channel arrangements gaseous heat transition medium.

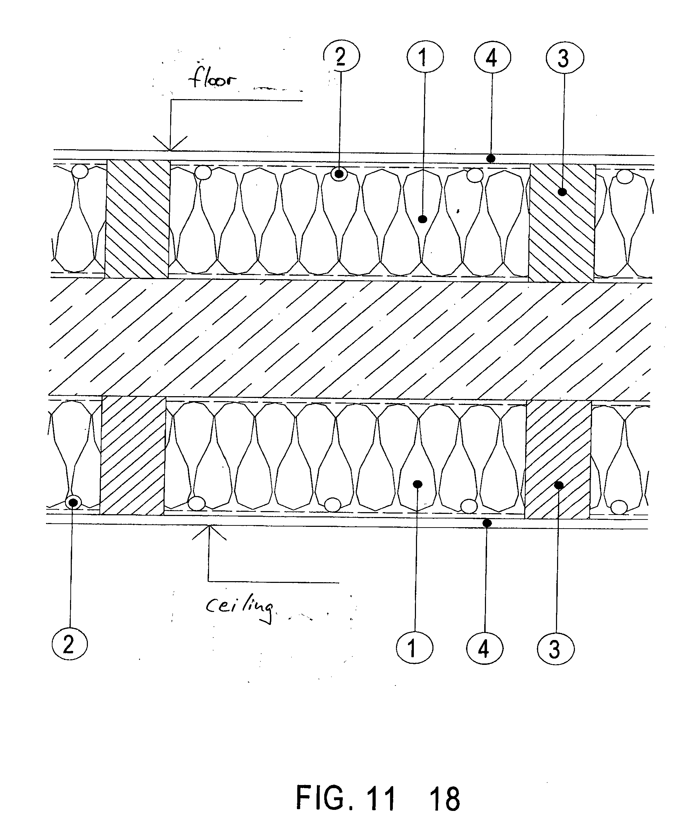

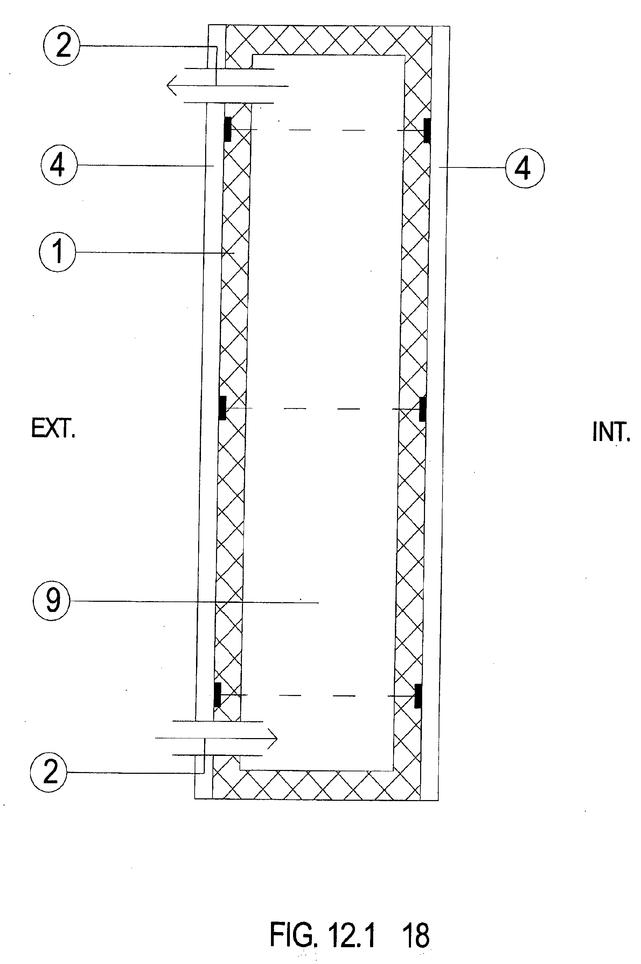

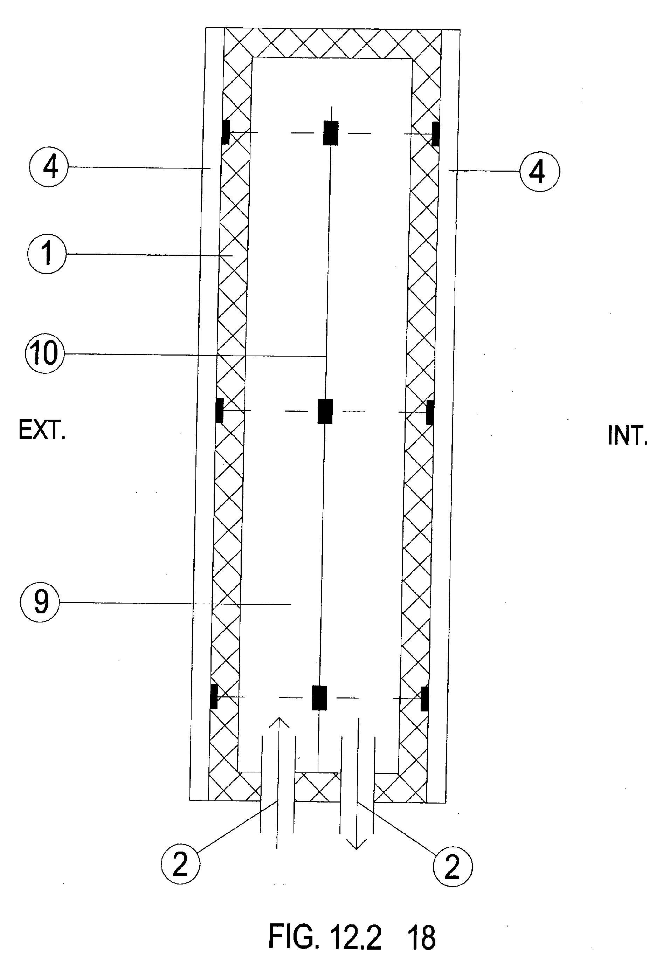

Fig. 11 shows a cross-section of the application of heat insulating panel for low-temperature floor ceiling heating, low temperature ceiling heating and high temperature cooling. On Fig. 12.1 and 12.2 are shown cross-sections of the construction of heat insulating panel with two large-scale boundary plates as heat insulation in the cavity and placed it in an alternative heat transition element.

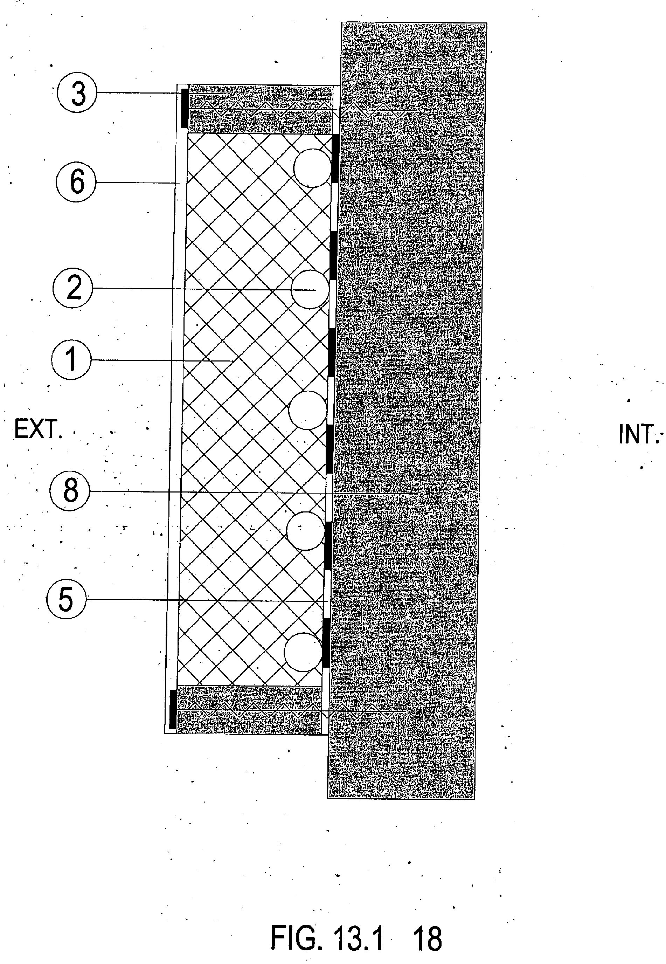

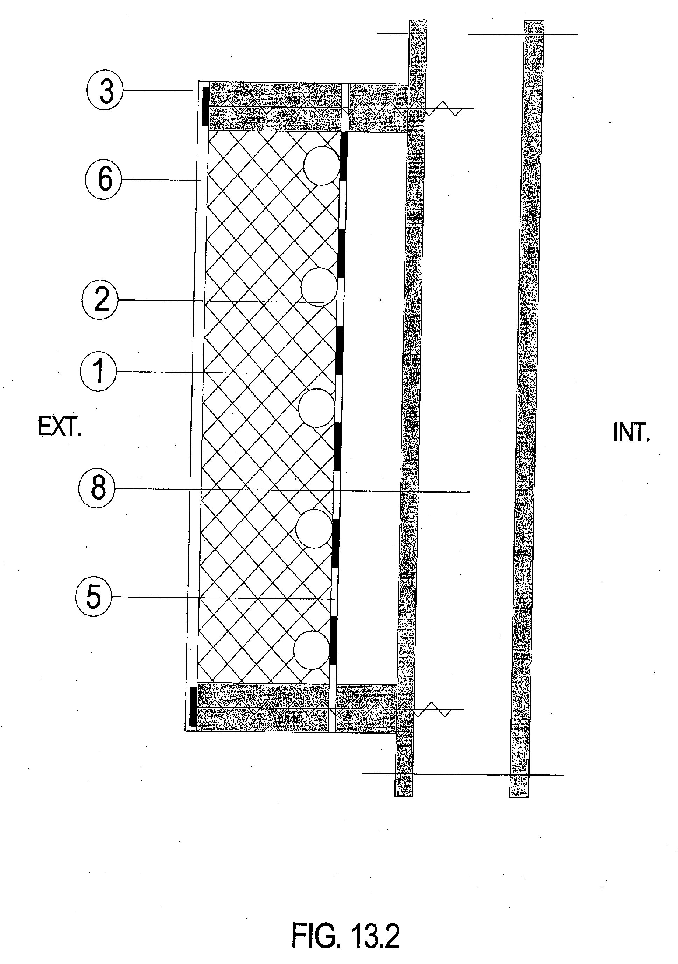

Fig. 13.1 and 13.2 disclose a heat insulating panel according to the invention with the frame structure and supporting structure. Fig. 14 shows a cross-section of the construction of heat insulating panel in lightweight concrete facade.

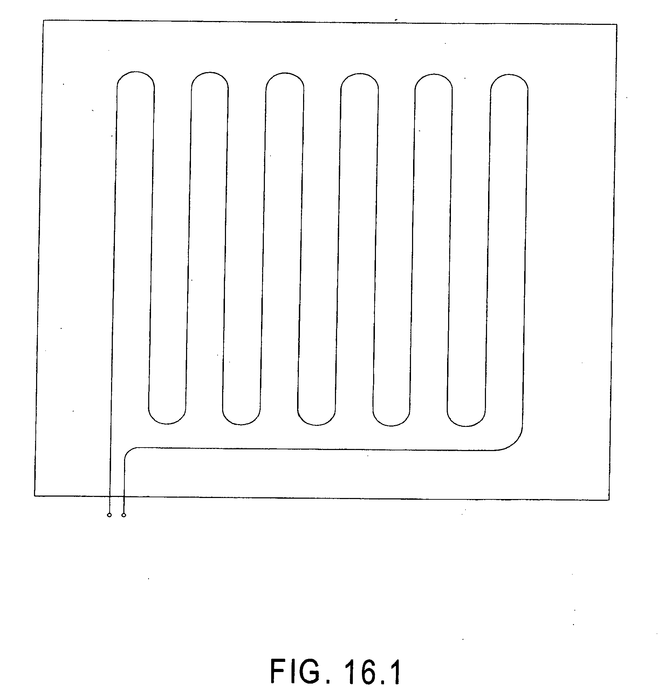

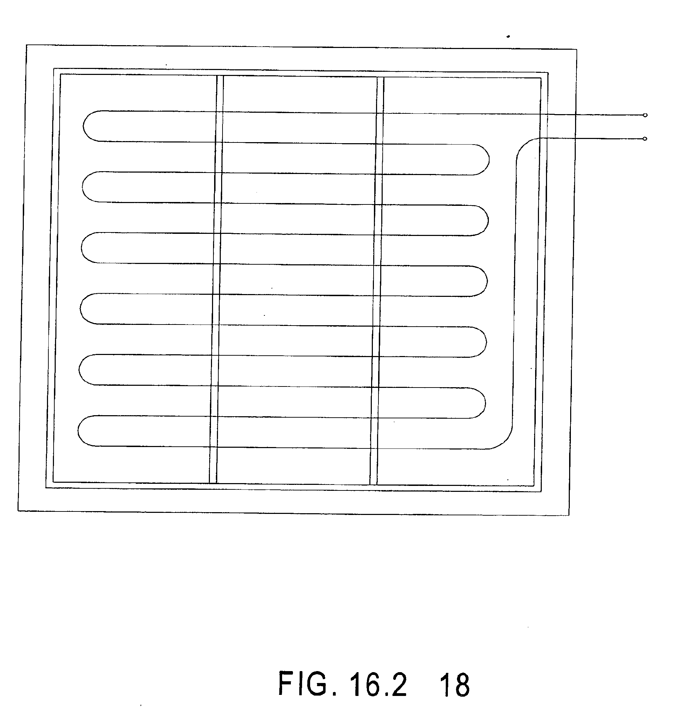

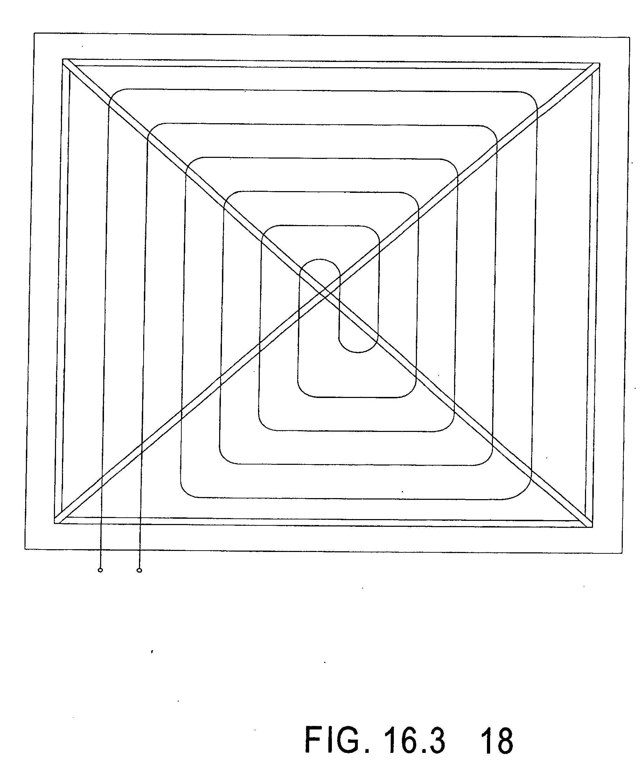

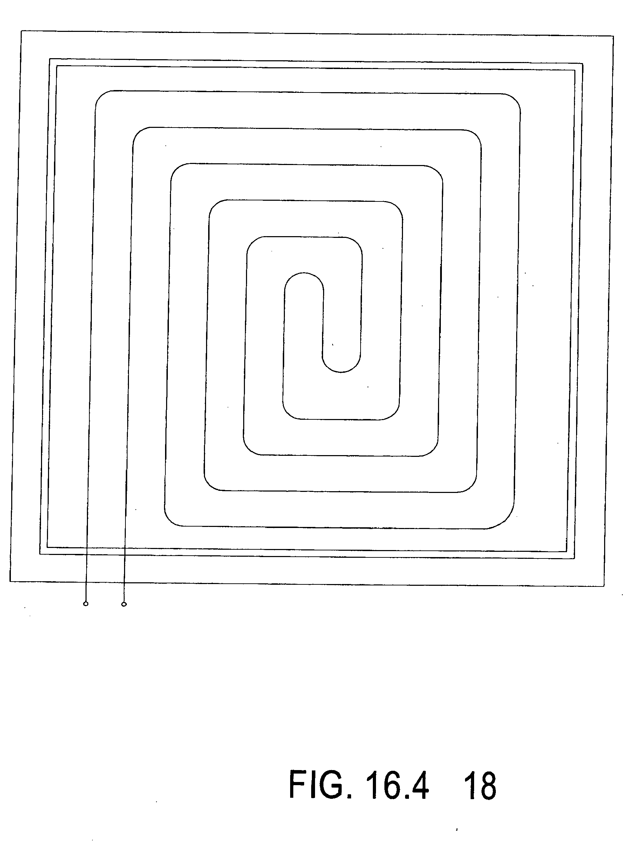

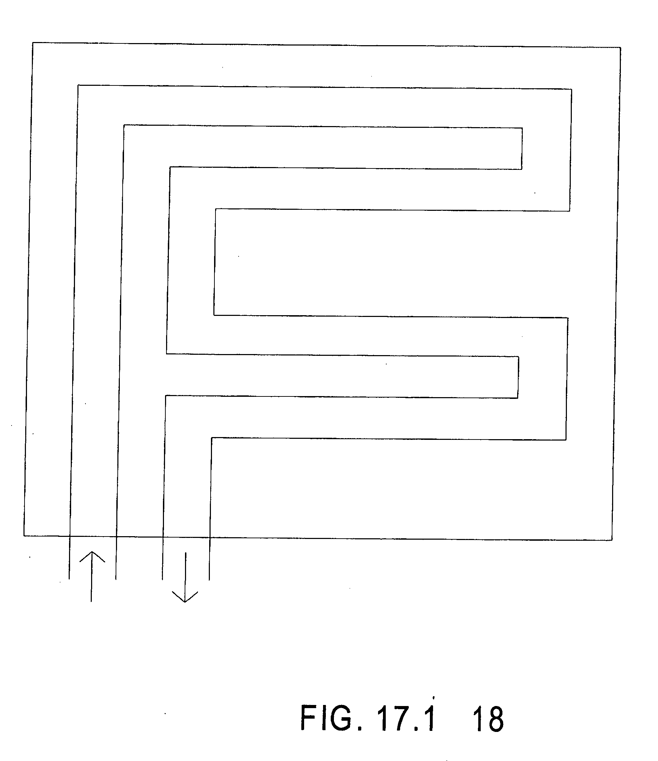

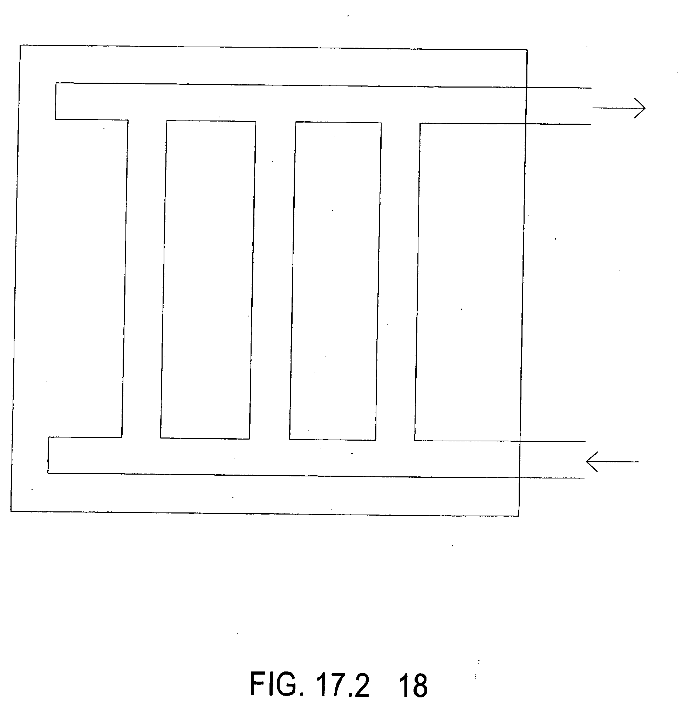

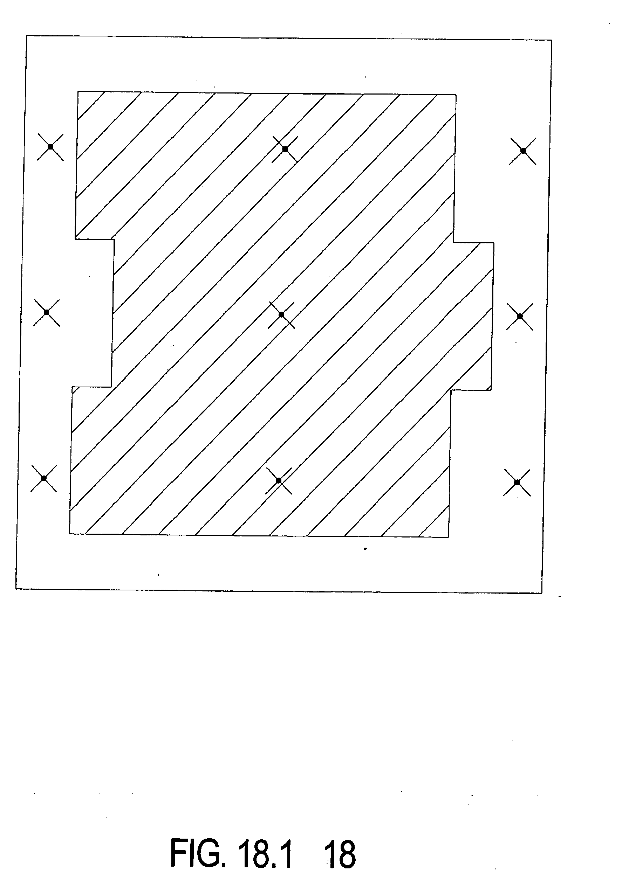

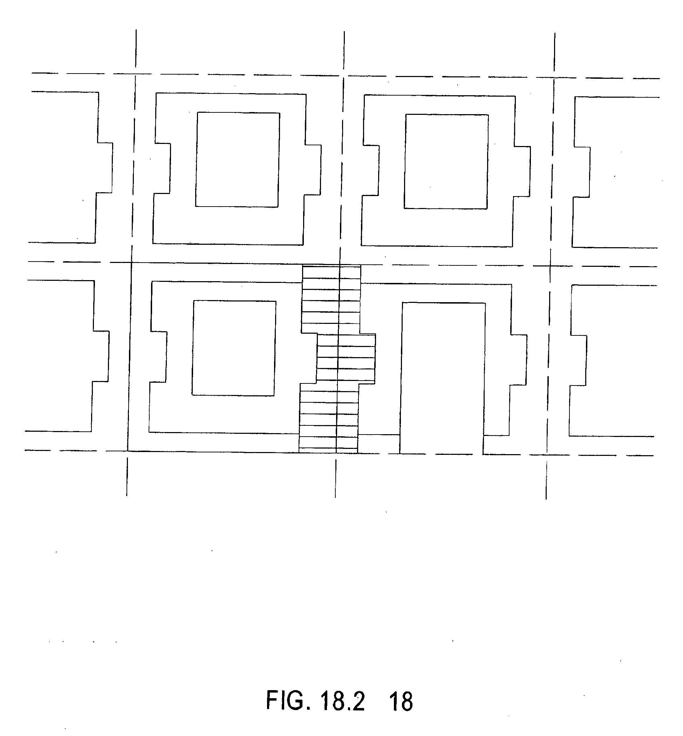

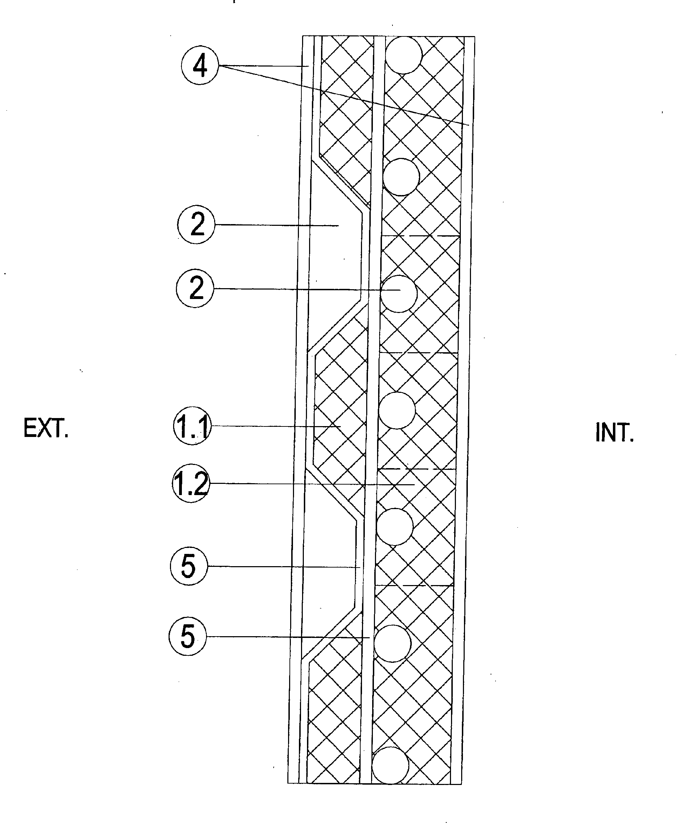

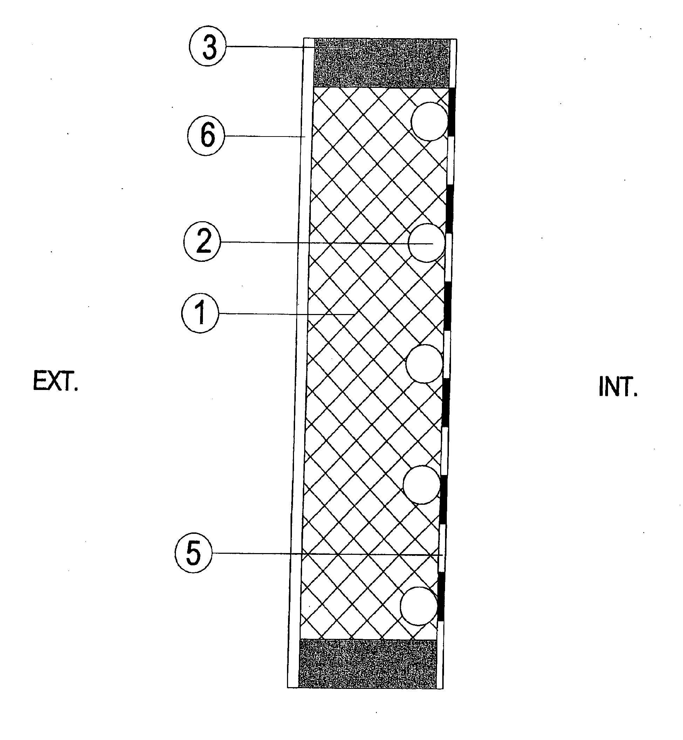

Fig. 15 shows a cross-section of construction of heat insulation panel with a supporting frame itself. On Fig. 16.1 to 16.4 is shown view to laying of active heat protection - heat barrier in heat insulation panels. On Fig. 17.1 and 17.2 is shown a view of the imposition of air ducts in heat insulation panels. On Fig. 18.1 and 18.2 is shown the way of the mounting assembly and supply of heat-insulating panel.

### Examples of realizations of technical handling

### Example 1

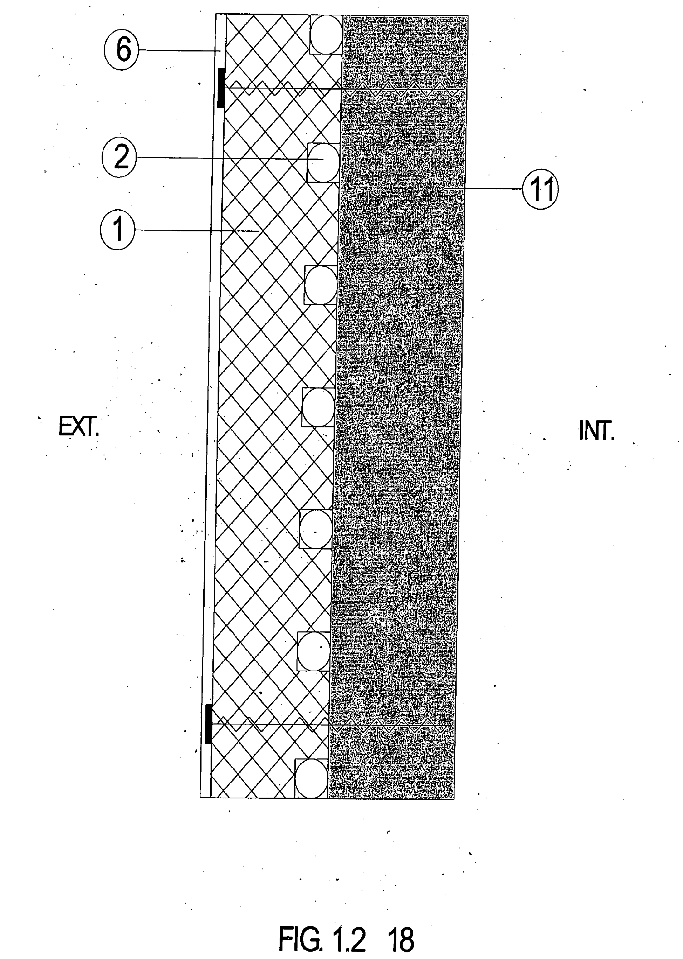

In this case of specific realization of the subject of technological handling is described the first basic construction of heat panel for the systems with active regulation of heat transition illustrated in Fig. 1.2 It consists of heat insulation system in the form of solid plates, which is attached to pipe or hose arrangement 2 Distribution of heat transition liquid medium as an active heat protection - heat barrier. Heat insulation panel is fixed to the wall cladding 11 buildings, attached by mechanical anchors, eg. disc using dowels and / or using adhesives. Finishing panels layer 6 of exterior is applied , such as, plaster or other facade material.

In an alternative embodiment shown in fig. 1.5 is the application of heat insulating panel anchored to the support frame system of construction of Building 12.

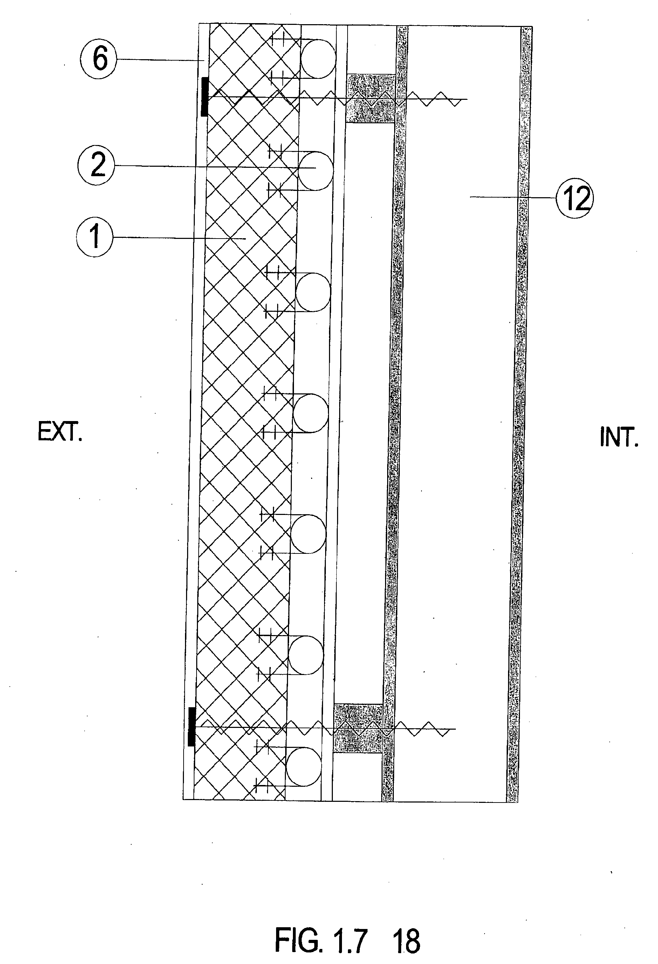

In variant realisations, the active heat protection is possible to be fixed to a rigid board insulation 1, directly, without the system board, with appropriate fixtures, mechanical fasteners, as shown in Fig. 1.1 and 1.7 .The application of heat-insulating panel is used to attach the cladding to the building wall 11, or the supporting frame construction system of Building 12

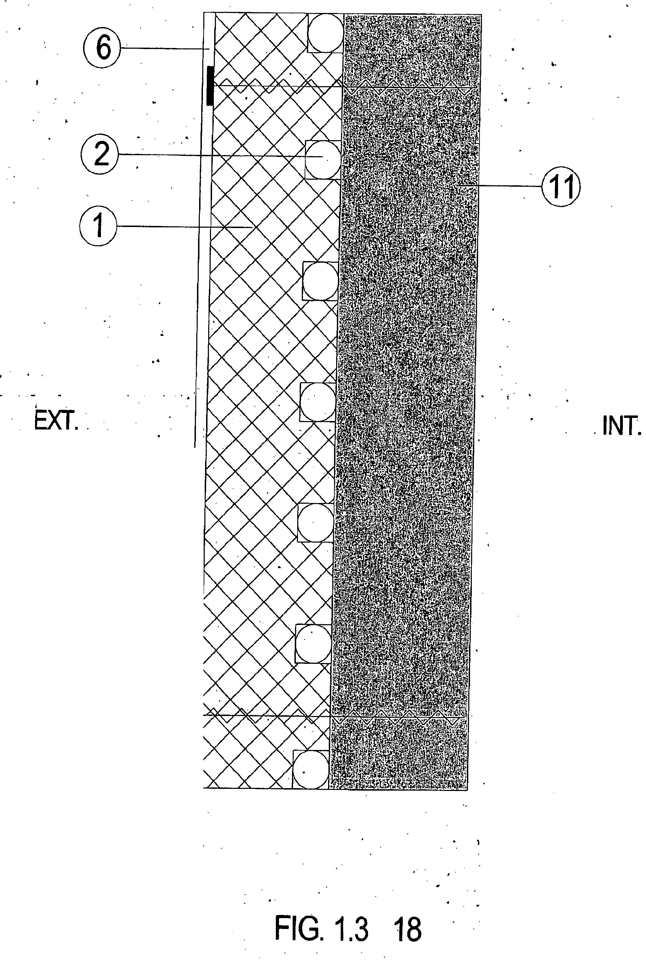

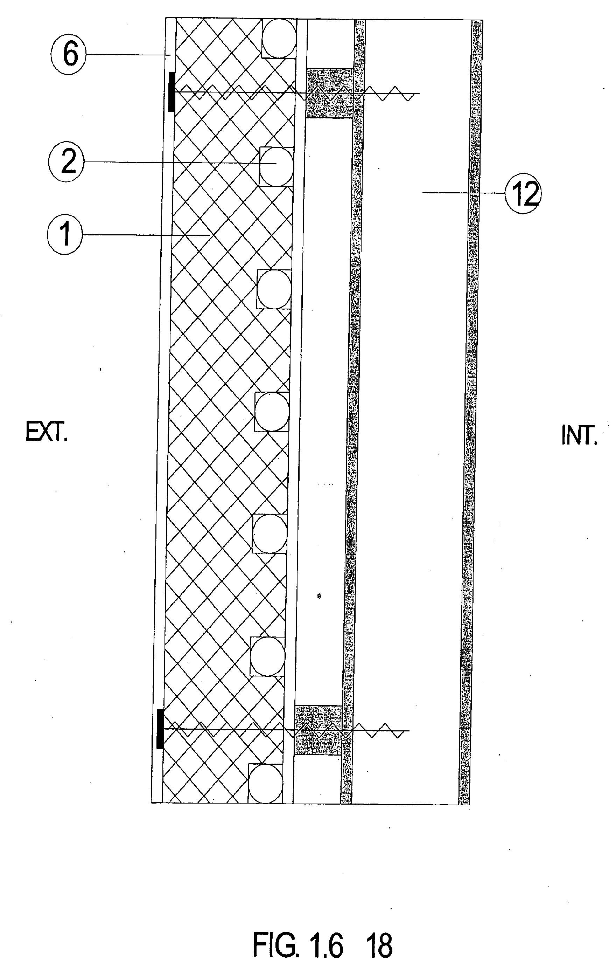

In the alternative shown in FIG. 1.3 it is possible pipe or hose arrangement 2 Distribution of heat transition liquid medium as an active heat protection placed in troughs milled in a rigid board insulation first The application of heat-insulating panel is used to attach the cladding of the building wall 11 or the supporting frame structural system of the building 12, as shown in Fig. 1.6

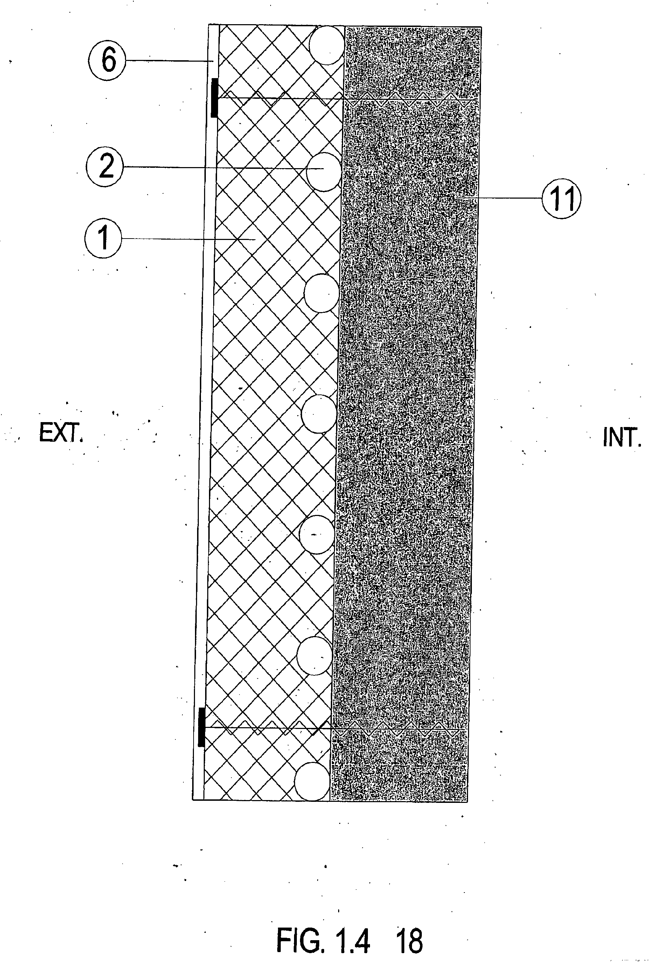

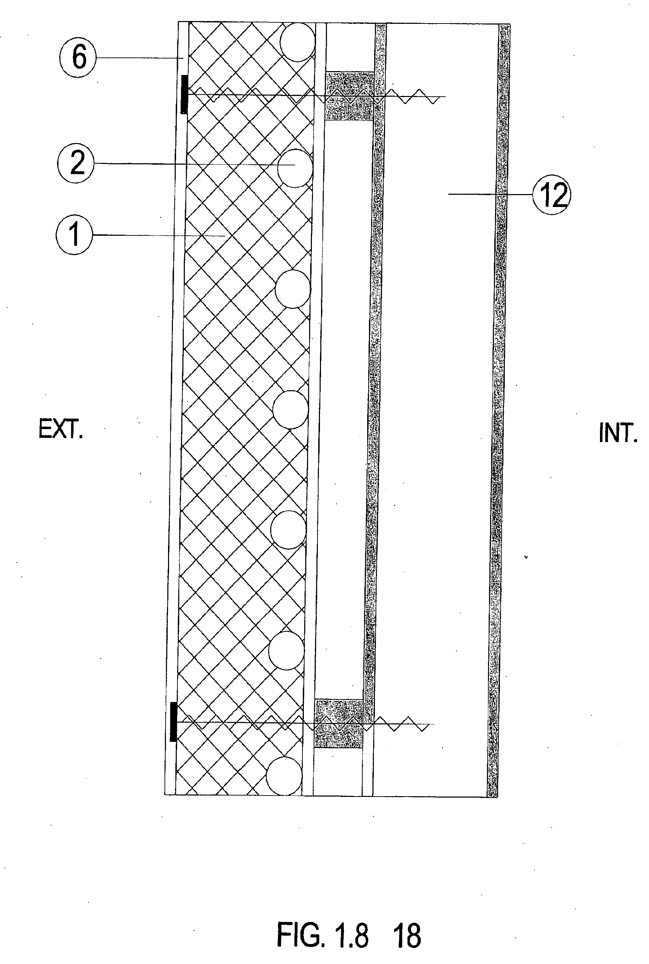

In the alternative shown in FIG. 1.4, the possible elements of an active heat protection is possible to pour directly in the manufacture of rigid insulation board first .The application of heat-insulating panel it is used to attach the cladding of the building wall 11 or the supporting frame construction system 12, as shown in Fig. 1.8.

### Example 2

In this case of specific realization of the subject of technological handling is described the second base frame structure of heat insulation panel for systems with active regulation of heat transition shown in Fig. 2.1 and Fig. 15. It consists of a supporting frame 3, whose inner space is filled with heat insulation 1 which may be made of rigid plate but as mineral wool, polyurethane foam and the like. Pipe or hose arrangement 2 Distribution of heat transition liquid medium as an active heat protection - heat barrier is applied from the external bearing walls 11 of the building. From the inside of the heat insulation is used a thermally conductive and reflective layer 5, such as aluminum foil.

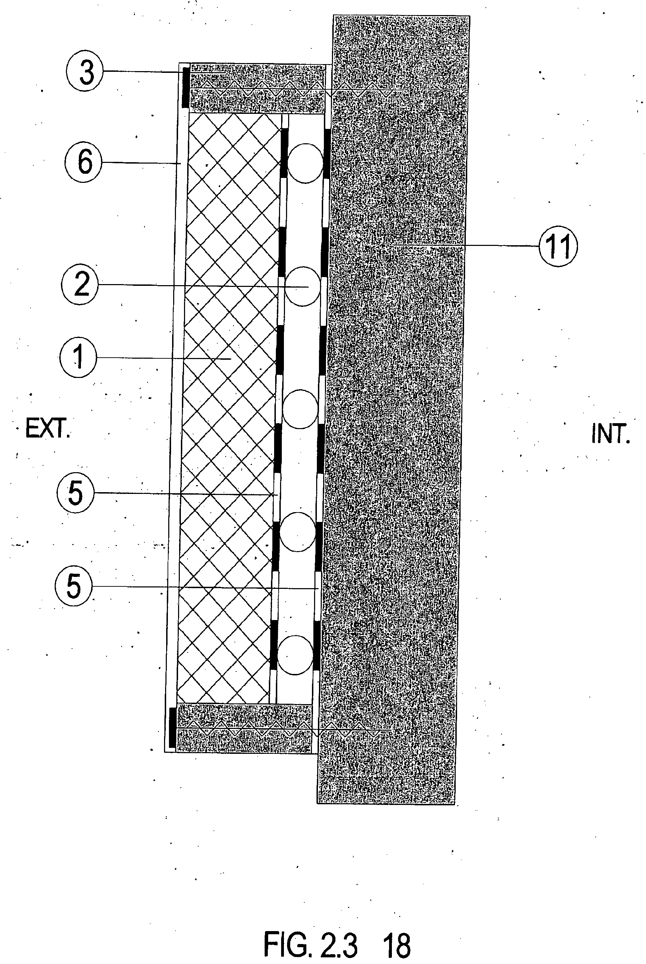

By supporting the outer wall of the building 11 there is direct contact of active heat protection - heat barrier wall with 11 buildings, or even used a heat-conductive reflective layer 5, as shown in Fig. 2.3 Heat insulation panel is fixed to the wall cladding 11 buildings by mechanical anchors, for example. disc using dowels.

For finishing of heat-insulating panel layer 6 of exterior is applied such as plaster or other facade material.

In the alternative, in Fig. 2.4 shows the application of heat insulation panels connected to the carrying frame structural system of 12 buildings.

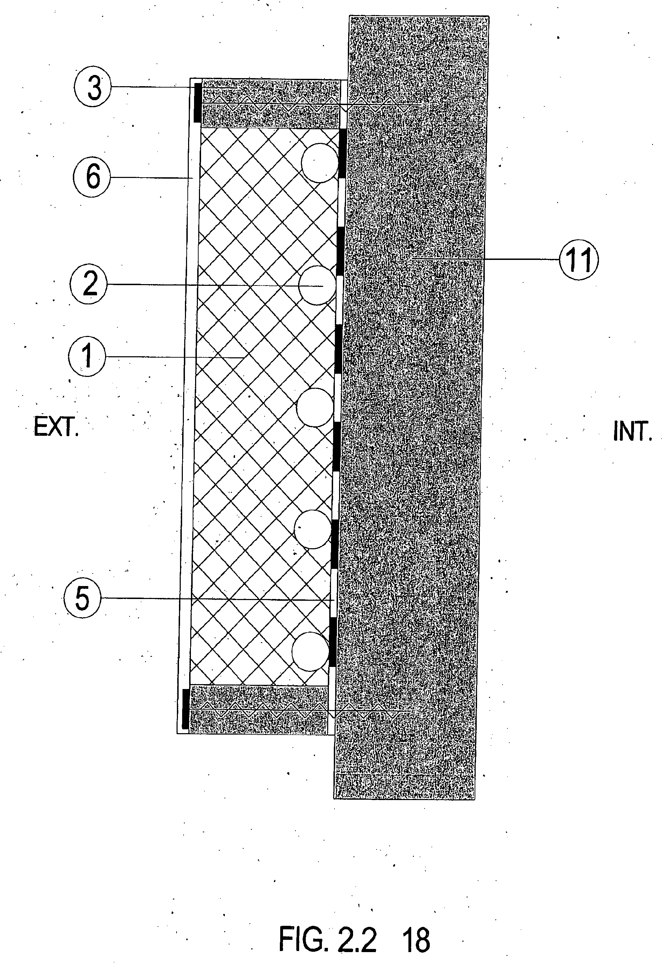

In the alternative, in Fig. 2.2 is shown active heat protection - heat barrier is placed directly in the heat insulation and a thermally-conductive reflective layer 5 is located by the panel which abuts the periphery of the bearing wall 11 of the building or supporting structural frame system 12 of the building as shown in Fig. 2.5.

### Example 3

In this case of specific realization of the subject of technological handling is described the third basic design of heat insulating panel for systems with active regulation of heat transition with one layer of the heat insulation and peripheral hub plates.

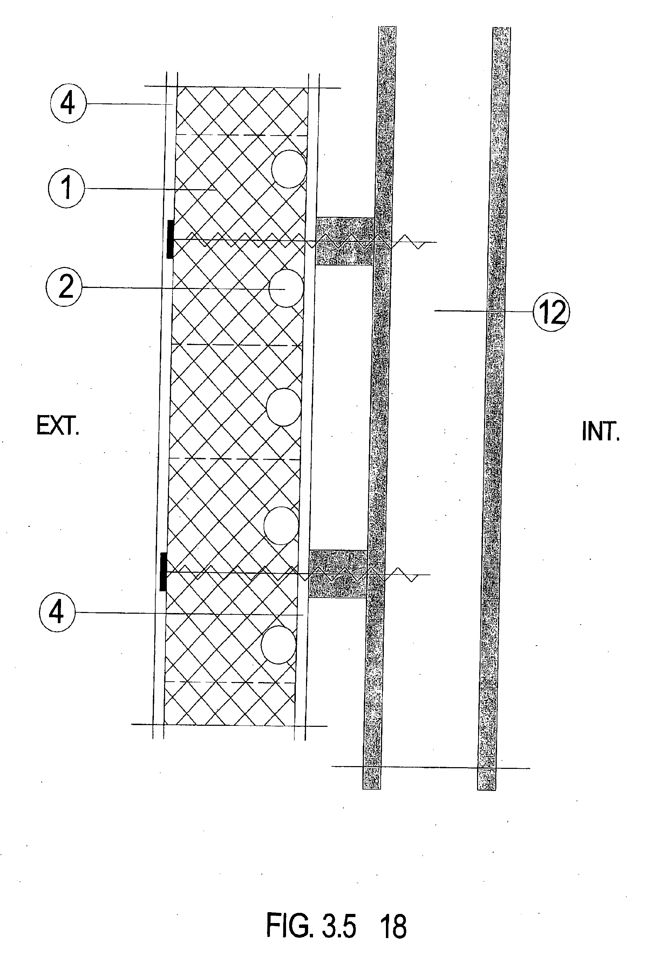

On Fig. 3.1 is shown the construction of heat-insulating panels with a tubular or hose arrangement of 2 heat transition liquid distribution media as heat protection placed directly in a heat insulation panel in part touching the perimeter bearing walls 11 of the building or supporting structural frame system 12 buildings as shown in Fig. 3.5

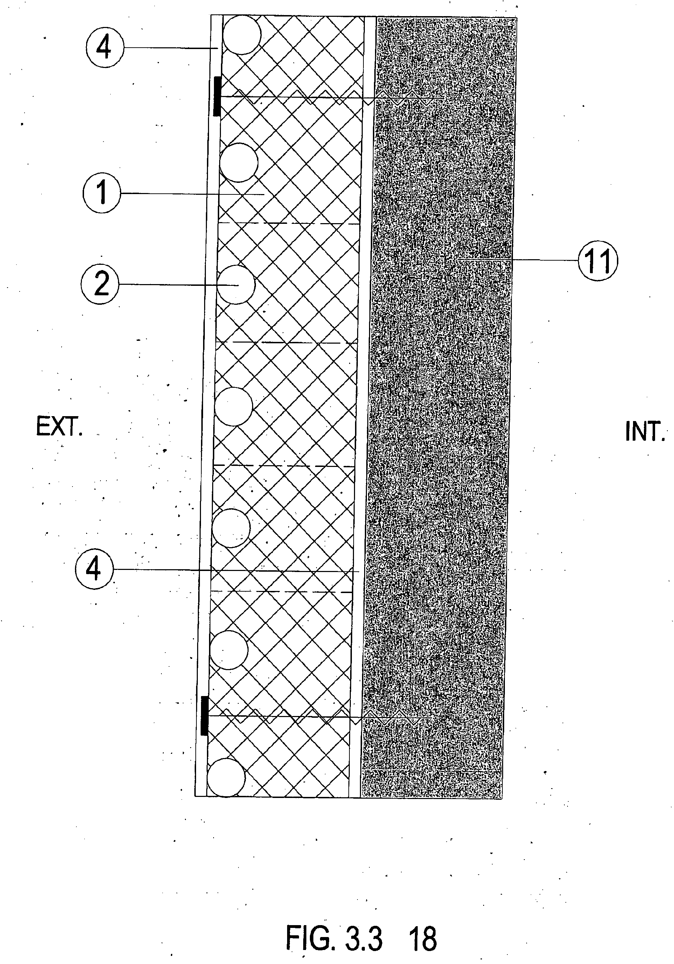

In the alternative, in Fig. 3.3 and 3.4 is shown the location of active heat protection imposed from the outside of the heat-insulating panel.

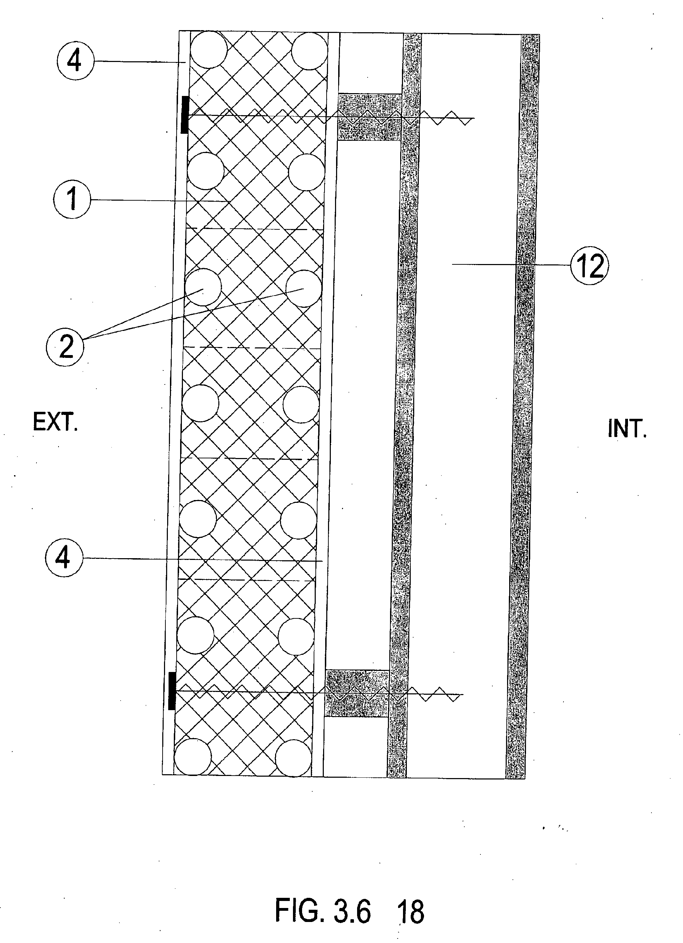

In the alternative, in Fig. 3.6 is shown the location of active heat protection imposed from the outside while the interior part of the heat-insulating panel.

### Example 4

In this case of specific realization of the subject of technological handling is described derived construction of heat-insulating panel for the systems with active regulation of heat transition with heat transition plates with peripheral hub 4 and 2 channel arrangement of heat transition gas distribution medium as shown in Fig. 4.1 and 4.2.

The space between the peripheral hub plates 4 is filled with heat insulation 1, which is just below the surface of distant large-scale plate 4 from the interior or developed channel arrangement 2 as channels for airflow. Heat insulation panels can be applied to the cladding of the building wall 11 or the supporting frame structural system of 12 buildings.

### Example 5

In this case of specific realization of the subject of technological handling is described derived construction of heat-insulating panel for the systems with active regulation of heat transition with heat transfer plates with peripheral hub 4 in combination with a tubular or hose and at the same time with 2-channel distribution arrangement of heat transition of liquid and gaseous media as a heat barrier and air ducts, as shown in Fig. 5.1 and 5.2.

Air ducts and active heat protection - heat barrier placed just below the interior and exterior surface of heat-insulating panel. Heat insulating panel can be applied to interior and exterior of the buildings on the perimeter walls 11 of the building or structural frames 12 as a lightweight cladding.

Thus, engineered heat insulating panel may serve as a heat barrier combined with a heating or cooling, function of solar absorber associated with heat barrier, heating and cooling and combinations of these functions.

### Example 6

In this case of specific realization of the subject of technological handling is described derived construction of heat panel for the systems with active regulation of heat transition illustrated in Fig. 6.1 and 6.2. Heat insulating panel is made up of rigid insulation board 1.1 with troughs milled to store two patterns of hose-pipe or 2 Distribution of heat transition liquid medium such as of active heat protection - heat barrier. Elements of active heat protection -heat barrier may be in a solid board and encapsulated or embedded in its production.

On the rigid insulation board 1.1 is glued a second layer of insulation 1.2. Rigid board insulation 1.1 is provided with the facade of the visual structure of 6 in the form of plaster. Heat insulating panel can be used from interior or exterior side of the external bearing walls 11 of the building or structural frames 12, as shown in Fig. 6.2

Active heat barrier may have in this case the function of the solar heat absorber or barrier, or wall heating, cooling, or combinations of these functions.

### Example 7

In this case of specific realization of the subject of technological handling is described derived construction of heat insulating panel for the systems with active regulation of heat transition with multiple layers of insulation with the median large-plate 7, as shown in Fig. 7.1 The supporting frame 3 from the central panel is attached to the center of the large format plate 7. The first and second layer of insulation 1.1 and 1.2 is imposed on both sides of the median large-scale plates 7. Rigid board insulation 1.1 is provided with the facade of the visual structure of 6 in the form of plaster or other facade materials.

Pipe or hose arrangement 2 Distribution of heat transition liquid medium such as an active heat protection - heat barrier affects conductive heat reflective foil 5. Heat insulating panel can be placed on exterior side or from interior cladding of walls 11 of the building or supporting structural frame system 12 of the building, as shown in Fig. 7.3

Alternative solution to the heat-insulating panel as shown in Figure 7.2 allows you to place two layers of pipe or hose arrangement of two heat transition liquid distribution media such as an active heat protection - heat barrier, while both touching two thermally conductive reflective foil 5.

One part of the active heat protection is placed at the center of large-scale plate 7 and the second part of the active heat protection - heat barrier at the edge of the heat-insulating panel in contact with the cladding of the building wall 11.

An alternative solution for positioning heat-insulating panels for structural frames of the building 12 shown in FIG. 7.4 Dual active heat barrier allows to use multiple combinations of its functions.

### Example 8

In this case of specific realization of the subject of technological handling is described derived construction of heat - insulating panel for the systems with active regulation of heat transition with two layers of heat insulation of 1.1 and 1.2 with at least one large-marginal plate 4, as shown in Fig. 8.1 and 8.2.

In the heat insulation panels is in the inner space of the first insulation 1.1 integrated tube or hose arrangement 2 Distribution of heat transition liquid medium such as an active heat protection - heat barrier. Furthermore, the heat-insulating panels contained heat-conductive layer 5 in the form such film or sheet, which distributes heat-insulating panel into two parts.

Heat insulating panel can be applied to heat barrier - active heat protection, heating and cooling. On the cladding building wall 11 heat-insulating panel attached directly in contact with the second layer of insulation 1.2, as shown in Fig. 8.1

When applying a heat insulating panel for structural frames 12 buildings, such as shown in obr.8.2 is necessary to use two large marginal plates 4. Both large marginal plates 4 can be joined together in the building normally used such as connecting elements is only shown on other figures.

### Example 9

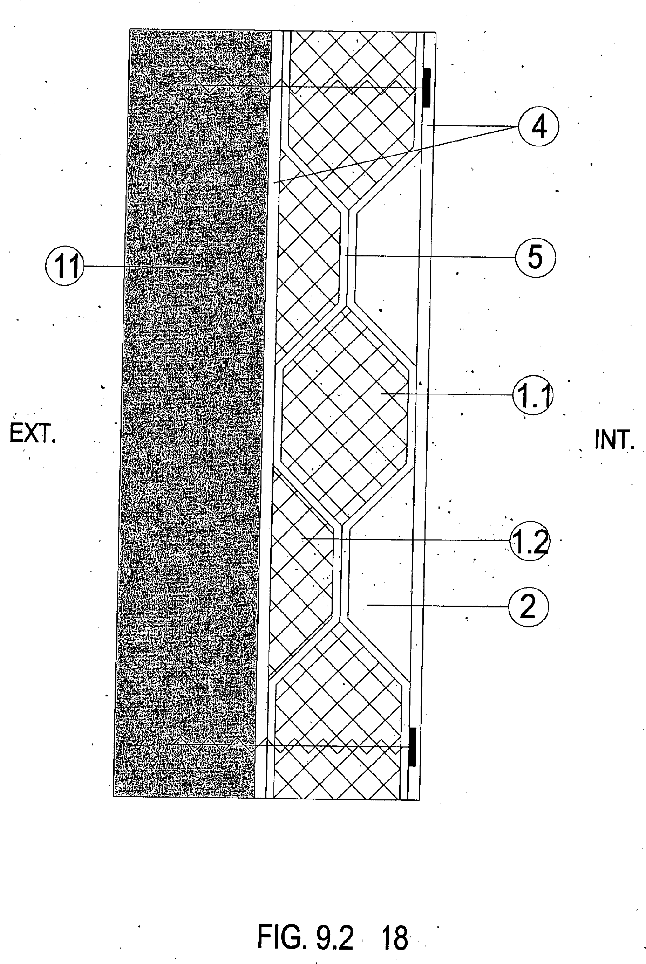

In this case of specific realization of the subject of technological handling is described derived construction of heat - insulating panel for the systems with active regulation of heat transition with heat transition to peripheral large-circuit plates 4 and channel arrangement 2, such as air ducts, distribution of gaseous heat transition medium, preferably air, such as an active heat protection - heat barrier, as shown in Fig. 9.1 and 9.2. In the inner space of heat insulating panel with two overarching layers of insulation 1.1 and 1.2 is integrated at least one thermally conductive layer 5 formed, which creates air ducts and heat insulation panel is divided into two parts. Air channels can play the role of solar air collector or heat barrier. Fig. 9.2 is illustrated by application of heat insulating panel from the interior side of the building where the panel can be used for air heating, cooling, ventilation.

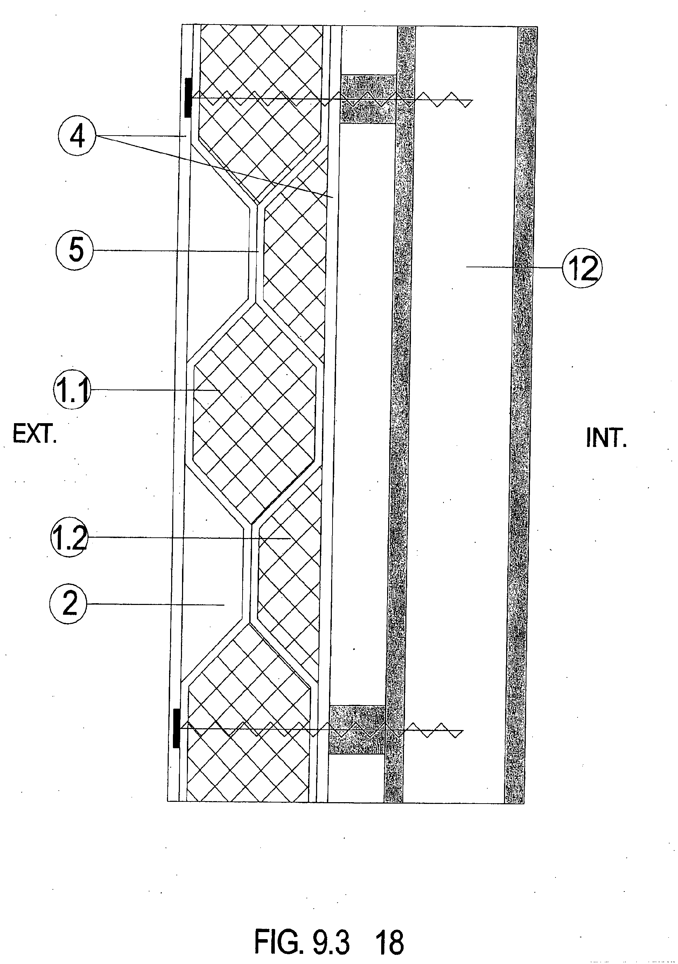

Alternatively, the use of heat-insulating panel can also function in the outer wall for easy attachment to the support frame system of construction of 12 buildings, such as shown in Fig. 9.3.

### Example 10

In this case of specific realization of the subject of technological handling is described derived construction of heat-insulating panel for the systems with active regulation of heat transition system for the application of active control of heat transition of a large-scale boundary plates 4, with the first tube or hose arrangement 2 Distribution of heat transition liquid medium such as an active heat protection - heat barrier, and the second channel arrangement of two gas distribution of heat transition media, created such as air ducts for the purpose of warm-air heating, cooling, ventilation, which is shown in Fig. 10.1 to 10.3 and Fig. 14.

In the inner space of heat - insulating panel between the first and second layer of insulation 1.1 and 1.2 is an integrated thermally conductive layer 5 and divided panel into at least two parts. The second integrated thermally conductive layer 5 creates air channels.

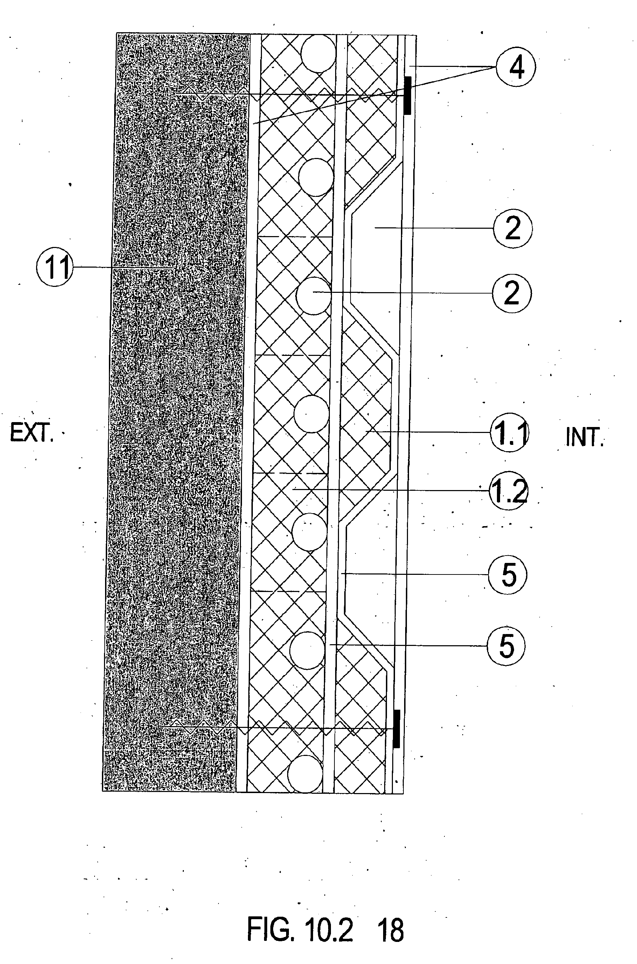

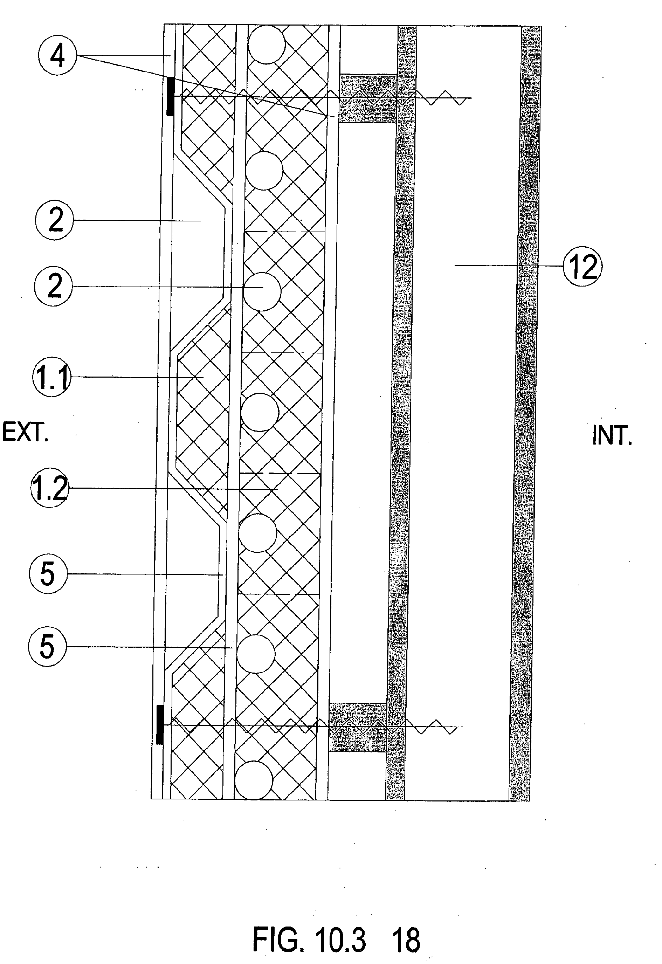

Heat insulating panel can be applied to hot air heating, cooling, ventilation in the imposition of the outer walls of the building, as shown in Fig. 10.2 Heat insulating panel can be used such as solar air collector, heat barrier for its imposing exterior side of the building as shown in Fig. 10.1 Heat insulating panel is also possible to fit the carrier frame construction system 12 of the building, as shown in Fig. 10.3

### Example 11

In this case of specific realization of the subject of technological handling is described a further derived structure of heat insulation panels with active heat protection system for the application of active regulation of heat transition for low-temperature floor heating, low temperature heating and cooling with high temperature ceiling peripheral hub plates 4, as shown Fig. 11.

Heat insulation panels are constructed with a supporting frame 3 filled heat insulation and a tube or hose 2 arranged by adding distribution of liquid heat transition media such as active heat protection - heat barrier, located at the edge of heat-insulating panel according to whether it is on the floor heating or cooling.

### Example 12

In this case of specific realization of the subject of technological handling is described another derived construction of heat insulation panels with active heat protection system for the application of active control of peripheral heat transition plates 4 and hub with warmed insulated hollow core - hollow 9 formed of heat insulation allowing a controlled flow thermally conditioned air through a pipe or hose, or 2 channel distribution arrangement the heat transition liquid or gaseous medium, thereby implementing the function of active heat protection - heat barrier, as shown in Fig. 12.1

Alternatively, the cavity 9 in the core of heat insulation can be applied to one or more large-scale heat exchange bodies 10, as shown in Fig. 12.2

It is also possible combination with active heat protection on the basis of pipe or tubing impregnated with liquid.

### Example 13

Example 13 discloses a specific realization forming part of the invention, decribing a construction of heat insulation panels with active heat protection system for the application of active regulation of heat transition in the modification of self-supporting of heat insulation panel, as shown in Fig. 13.1, in which is contained in the supporting frame 3 with heat insulation and a tube or hose or channel distribution arrangement of two heat transition liquid or gaseous medium applied permanent connection to the supporting structure 8 of the interior side and / or exterior side.

It is preferred that between the supporting structure 8 and heat insulation is an integrated thermally-conductive layer 5 .From facade of heat insulation panel is heat isolation 1 provided with an insulation of facade structure 6 in the form of plaster or other facade materials.

In doing so, the supporting structure 8 is a concrete or reinforced concrete or keramzit panel or sheet metal or wood, metal, plastic plate or brick structure or supporting frame of the building construction system as an alternative shown in Fig. 13.2.

### Example 14

In this case of specific realization of the subject of technological handling is described another combined derived construction of heat insulating panels with active heat protection system for the application of active regulation of heat transition in lightweight concrete facade.

His distant large scale plate 4 or the visual structure are the metal plates or sheets and at the distant large-scale plate 4 are formed channel organization 2 distribution of gaseous heat transition medium as shown in Fig. 14. Other structural details are sufficiently described already in Example 10.

### Utilization in the industry

The construction of heat insulating panel for the systems with active regulation of heat transition according to invention finds its utility in building industry.

## Claims

1. An assembly and a wall, wherein the assembly comprises a heat-insulating panel for systems with active regulation of heat transition and a supporting structure, said heat-insulating panel comprises
at least one heat-insulation (1),
on the surface of the heat-insulation (1) or in the volume of the heat isolation (1) is applied at least one of a tube or hose or channel arrangement (2) which distribute directly a heating or cooling liquid or gaseous media, whereby the heat-insulation (1) is bounded at least from one side by a supporting frame (3) and/or bounded at least from one side by a large scale boundary plate (4),
whereby the supporting frame (3) and/or the large scale boundary plate (4) comprises bindings and/or anchors **characterized in that**
the heat-insulation panel is applied by said bindings and/or anchors to the supporting structure (8) and said supporting structure (8) itself is connected to an interior and/or exterior side of the wall (12) of a building.

2. An assembly and a wall according to claim 1, **characterized in, that** the heat-insulation (1) is made on the basis of insulating foam and/or mineral wool and/or stoneware waves and/or a mixture of polyurethane and/or cellulose and/or organic matter.

3. An assembly and a wall according to claim 2, **characterized in, that** the at least one heat-insulation.(1) is provided with a thermally conductive or reflective or thermally conductive and heat reflective layer and/or film (5).

4. An assembly and a wall according to claim 3, **characterized in, that** the thermally conductive or reflective or thermally conductive and heat reflective layer and/or film (5) is positioned between the heat-insulation (1) and the at least one of the tube or hose or channel arrangement (2), which distribute the heating or cooling liquid or gaseous media.

5. An assembly and a wall according to claim 1, **characterized in, that** the heat-insulation (1) is provided with a visual structured finishing panel layer (6) on its exterior side.

6. An assembly and a wall according to at least one of claims 1-5, **characterized in, that** the heat isolation (1) comprises at least a first and a second heat-insulation (1.1., 1.2).

7. An assembly and a wall according to at least one of claims from 1 - 6, **characterized in, that** within the heat-insulation (1) is located a large scale plate (7).

8. An assembly and a wall according to claim 7, **characterized in, that** the large scale plate (7) exceeds the supporting frame (3).

9. An assembly and a wall according to claim 1, **characterized in, that** the heat-insulating panel comprises a cavity (9) or a channel arrangement (2), which distribute a gaseous heating or cooling medium, and further comprises the large scale boundary plate (4).

10. An assembly and a wall according to claim -9, **characterized in, that** within the cavity (9) is positioned at least one heat-exchange element (10).

11. An assembly and a wall according to claim 1, **characterized in, that** the supporting structure (8) is a concrete or reinforced concrete or ceramic panel or a sheet metal or wood or a metal plate or a plastic plate or a brick structure.

12. An assembly and a wall according to claims 1 or 5, **characterized in, that** in a modification of lightweight concrete cladding, the channel arrangement (2) is positioned at the exterior side of the heat-insulating panel and the large-scale boundary plate (4) or the visual structured finishing panel layer (6) are in the form of a metal plate or plates on the basis of wood and/or plastic and/or polycarbonates and/or glass and/or stone.

13. An assembly and a wall according to claim 12, **characterized in, that** the channel arrangement (2) distributes a gaseous heating or cooling medium.

## Patentansprüche

1. Anordnung und Wand, wobei die Anordnung eine Wärmedämmplatte für Systeme mit aktiver Wärmedurchgangsregelung und eine Trägerstruktur umfasst, wobei die Wärmedämmplatte mindestens eine Wärmedämmung (1) umfasst,
auf der Oberfläche der Wärmedämmung (1) oder im Volumen der Wärmedämmung (1) mindestens eine von einer Röhren- oder einer Schlauch- oder
Kanalanordnung (2) angebracht ist, die direkt eine Erwärmungs- oder Kühlflussigkeit oder ein gasförmiges Medium verteilt, wobei die Wärmedämmung (1) mindestens auf einer Seite durch einen Trägerrahmen (3) und/oder mindestens auf einer Seite von einer Grenzplatte im großen Maßstab (4) umgeben ist,
wobei der Trägerrahmen (3) und/oder die Grenzplatte im großen Maßstab (4) Bewehrungen und/oder Anker umfasst,
**dadurch gekennzeichnet, dass**
die Wärmedämmplatte durch die Bewehrungen und/oder Anker an die Trägerstruktur (8) angebracht ist und die Trägerstruktur (8) selbst mit einer Innen- und/oder Außenseite der Wand (12) eines Gebäudes verbunden ist.

2. Anordnung und Wand nach Anspruch 1, **dadurch gekennzeichnet, dass** die Wärmedämmung (1) auf der Basis von Isolierschaumstoff und/oder Mineralwolle und/oder Steinzeugwellen und/oder einer Mischung von Polyurethan und/oder Cellulose und/oder organischer Substanz hergestellt ist.

3. Anordnung und Wand nach Anspruch 2, **dadurch gekennzeichnet, dass** die mindestens eine Wärmedämmung (1) mit einer wärmeleitenden oder -reflektierenden oder wärmeleitenden und wärmereflektierenden Schicht und/oder Folie (5) versehen ist.

4. Anordnung und Wand nach Anspruch 3, **dadurch gekennzeichnet, dass** die wärmeleitende oder -reflektierende oder wärmeleitende und wärmereflektierende Schicht und/oder Folie (5) zwischen der Wärmedämmung (1) und der mindestens einen Röhren- oder Schlauch- oder Kanalanordnung (2) positioniert ist, die die Erwärmungs- oder Kühlungsflüssigkeit oder das gasförmige Medium verteilt.

5. Anordnung und Wand nach Anspruch 1, **dadurch gekennzeichnet, dass** die Wärmedämmung (1) mit einer visuell strukturierten Deckplattenschicht (6) auf ihrer Außenseite versehen ist.

6. Anordnung und Wand nach mindestens einem der Ansprüche 1 - 5, **dadurch gekennzeichnet, dass** die Wärmedämmung (1) mindestens eine erste und eine zweite Wärmedämmung (1.1, 1.2) umfasst.

7. Anordnung und Wand nach mindestens einem der Ansprüche 1 - 6, **dadurch gekennzeichnet, dass** sich innerhalb der Wärmedämmung (1) eine Platte in großem Maßstab (7) befindet.

8. Anordnung und Wand nach Anspruch 7, **dadurch gekennzeichnet, dass** die Platte in großem Maßstab (7) den Trägerrahmen (3) überschreitet.

9. Anordnung und Wand nach Anspruch 1, **dadurch gekennzeichnet, dass** die Wärmedämmplatte einen Hohlraum (9) oder eine Kanalanordnung (2) umfasst, die ein gasförmiges Erwärmungs- oder Kühlmedium verteilt, und des Weiteren die Grenzplatte in großem Maßstab (4) umfasst.

10. Anordnung und Wand nach Anspruch 9, **dadurch gekennzeichnet, dass** innerhalb des Hohlraums (9) mindestens ein Wärmeaustauschelement (10) positioniert ist.

11. Anordnung und Wand nach Anspruch 1, **dadurch gekennzeichnet, dass** die Trägerstruktur (8) eine Beton- oder Stahlbeton- oder Keramikplatte oder eine Metallblech- oder Holz- oder eine Metallplatte oder eine Kunststoffplatte oder eine Ziegelstruktur ist.

12. Anordnung und Wand nach Anspruch 1 oder 5, **dadurch gekennzeichnet, dass** in einer Modifikation von Leichtbetonverkleidung die Kanalanordnung (2) an der Außenseite der Wärmedämmplatte positioniert ist und die Grenzplatte in großem Maßstab (4) oder die visuell strukturierte Abdeckplattenschicht (6) in Form einer Metallplatte oder von Platten auf der Basis von Holz und/oder Kunststoff und/oder Polycarbonaten und/oder Glas und/oder Stein vorliegen.

13. Anordnung und Wand nach Anspruch 12, **dadurch gekennzeichnet, dass** die Kanalanordnung (2) ein gasförmiges Erwärmungs- oder Kühlmedium verteilt.

## Revendications

1. Ensemble et mur, dans lequel l'ensemble comprend un panneau d'isolation thermique pour des systèmes à régulation active de la transition de chaleur et une structure de support, ledit panneau d'isolation thermique comprenant au moins une isolation thermique (1), sur la surface de l'isolation thermique (1) ou dans le volume de l'isolation thermique (1) il est appliqué au moins un d'un agencement de tubes ou de tuyaux ou de canaux (2) qui distribuent directement un agent de chauffage ou de refroidissement liquide ou gazeux,
dans lequel l'isolation thermique (1) est délimitée au moins sur un côté par un cadre de support (3) et/ou est délimitée sur au moins un côté par une plaque limite à grande échelle (4),
dans lequel le cadre de support (3) et/ou la plaque limite à grande échelle (4) comprend des fixations et/ou des ancrages,
**caractérisé en ce que** le panneau d'isolation thermique est appliqué par lesdites liaisons et/ou lesdits ancrages à la structure de support (8), et ladite structure de support (8) elle-même est connectée à un côté intérieur et/ou extérieur du mur (12) d'un bâtiment.

2. Ensemble et mur selon la revendication 1, **caractérisés en ce que** l'isolation thermique (1) est réalisée sur la base d'une mousse isolante et/ou d'une laine minérale et/ou d'ondes de grès cérame et/ou d'un mélange de polyuréthane et/ou de cellulose et/ou de matière organique.

3. Ensemble et mur selon la revendication 2, **caractérisés en ce que** ladite au moins une isolation thermique (1) comprend une couche et/ou un film (5) thermiquement conducteur(-trice) ou thermiquement réfléchissant(e), ou thermiquement conducteur(-trice) et thermiquement réfléchissant(e).

4. Ensemble et mur selon la revendication 3, **caractérisés en ce que** la couche et/ou le film (5) thermiquement conducteur(-trice) ou thermiquement réfléchissant(e), ou thermiquement conducteur(-trice) et thermiquement réfléchissant(e) est positionné(e) entre l'isolation thermique (1) et ledit au moins un de l'agencement de tubes ou de tuyaux ou de canaux (2) qui distribuent les agents de chauffage ou de refroidissement liquides ou gazeux.

5. Ensemble et mur selon la revendication 1, **caractérisés en ce que** l'isolation thermique (1) comprend une couche de panneau de finition visuelle structurée (6) sur son côté extérieur.

6. Ensemble et mur selon au moins une des revendications 1 à 5, **caractérisés en ce que** l'isolation thermique (1) comprend au moins une première et une deuxième isolations thermiques (1.1, 1.2).

7. Ensemble et mur selon au moins une des revendications 1 à 6, **caractérisés en ce qu'**une plaque à grande échelle (7) est située à l'intérieur de l'isolation thermique (1).

8. Ensemble et mur selon la revendication 7, **caractérisés en ce que** la plaque à grande échelle (7) dépasse du cadre de support (3).

9. Ensemble et mur selon la revendication 1, **caractérisés en ce que** le panneau d'isolation thermique comporte une cavité (9) ou un agencement de canaux (2) qui distribue un agent gazeux de chauffage ou de refroidissement, et comprend en outre la plaque limite à grande échelle (4).

10. Ensemble et mur selon la revendication 9, **caractérisés en ce qu'**au moins un élément d'échange de chaleur (10) est positionné à l'intérieur de la cavité (9).

11. Ensemble et mur selon la revendication 1, **caractérisés en ce que** la structure de support (8) est en béton ou en béton renforcé ou constituée d'un panneau de céramique ou d'une tôle de métal ou d'une plaque de bois ou de métal ou d'une plaque de plastique ou d'une structure en briques.

12. Ensemble et mur selon la revendication 1 ou 5, **caractérisés en ce que** dans une modification du parement de béton léger, l'agencement de canaux (2) est positionné sur le côté extérieur du panneau d'isolation thermique, et la plaque limite à grande échelle (4) ou la couche de panneau de finition visuelle structurée (6) se présente sous la forme d'une plaque ou de plaques de métal sur la base de bois et/ou de plastique et/ou de polycarbonates et/ou de verre et/ou de pierre.

13. Ensemble et mur selon la revendication 12, **caractérisés en ce que** l'agencement de canaux (2) distribue un agent de chauffage ou de refroidissement gazeux.
